# EUROPÄISCHE PATENTANMELDUNG

(11) **EP 4 471 912 A2**
(43) Veröffentlichungstag der Anmeldung: **04.12.2024**
(21) Anmeldenummer: 24177700.2
(22) Anmeldetag: 23.05.2024
(51) Int. Cl.: H01M 4/86, H01M 4/88, H01M 8/0234, H01M 8/0239, H01M 8/0243, H01M 8/0245, H01M 8/1004, H01M 8/10

(54) **GASDIFFUSIONSLAGE MIT VERBESSERTER FASEREINBINDUNG UND VERFAHREN ZU IHRER HERSTELLUNG**

(30) Priorität: 30.05.2023 DE 102023114086
(71) Anmelder: Carl Freudenberg KG, 69469 Weinheim (DE)
(72) Erfinder: BOCK, Achim, 69469 Weinheim (DE); KLEIN, Kristof, 69469 Weinheim (DE); RAKOUSKY, Christoph, Dr., 64372 Ober-Ramstadt (DE); BARSCH, Hannes, Dr., 69123 Heidelberg (DE); VON SPEE, Amélie, 68165 Mannheim (DE); LÖBLE, Matthias, Dr., 68309 Mannheim (DE)

(57) **Zusammenfassung**

Die vorliegende Erfindung betrifft ein Verfahren zur Herstellung einer Gasdiffusionslage für eine Brennstoffzelle auf Basis eines flächigen elektrisch leitfähigen Fasermaterials mit einer guten Einbindung der Fasern in das Fasermaterial. Die Erfindung betrifft weiterhin die nach diesem Verfahren erhältlichen Gasdiffusionslagen, eine Brennstoffzelle, die eine solche Gasdiffusionslage enthält sowie einen Brennstoffzellstapel, der wenigstens zwei solche Brennstoffzellen enthält.

## Beschreibung

Die vorliegende Erfindung betrifft ein Verfahren zur Herstellung einer Gasdiffusionslage für eine Brennstoffzelle auf Basis eines flächigen elektrisch leitfähigen Fasermaterials mit einer guten Einbindung der Fasern in das Fasermaterial. Die Erfindung betrifft weiterhin die nach diesem Verfahren erhältlichen Gasdiffusionslagen, eine Brennstoffzelle, die eine solche Gasdiffusionslage enthält, sowie einen Brennstoffzellstapel, der wenigstens zwei solche Brennstoffzellen enthält.

### HINTERGRUND DER ERFINDUNG

Brennstoffzellen nutzen die chemische Umsetzung eines Brennstoffs, insbesondere von Wasserstoff, mit Sauerstoff zu Wasser, um elektrische Energie zu erzeugen. In Wasserstoff-Sauerstoff-Brennstoffzellen wird Wasserstoff oder ein wasserstoffhaltiges Gasgemisch der Anode zugeführt, wo eine elektrochemische Oxidation unter Abgabe von Elektronen stattfindet (H₂ → 2 H⁺ + 2 e⁻). Über eine Membran, welche die Reaktionsräume gasdicht voneinander trennt und elektrisch isoliert, erfolgt ein Transport der Protonen aus dem Anodenraum in den Kathodenraum. Die an der Anode bereitgestellten Elektronen werden über einen äußeren Leiterkreis der Kathode zugeleitet. Der Kathode wird Sauerstoff oder ein sauerstoffhaltiges Gasgemisch zugeführt, wobei eine Reduktion des Sauerstoffs unter Aufnahme der Elektronen stattfindet. Die dabei gebildeten Sauerstoffanionen reagieren mit den über die Membran transportierten Protonen unter Bildung von Wasser (1/2 O₂ + 2 H⁺ + 2 e⁻ → H₂O).

Für viele Anwendungen, speziell im automobilen Antriebsstrang, werden Protonenaustauschmembran-Brennstoffzellen eingesetzt, die auch als Polymer-elektrolyt-Brennstoffzellen oder Polymer-Elektrolyt-Membran-Brennstoffzellen bezeichnet werden (englisch PEMFC = proton exchange membrane fuel cells, auch polymer electrolyte membrane fuel cells). Eine spezielle Ausführung sind Wasser-Sauerstoff-Brennstoffzellen in Form von Niedertemperatur-Protonenaustauschmembran-Brennstoffzellen (LT-PEMFC).Kernstück der Protonenaustauschmembran-Brennstoffzellen ist eine Polymer-Elektrolyt-Membran (PEM) ist, die nur für Protonen (bzw. Oxoniumionen H₃O⁺) und Wasser durchlässig ist und das Oxidationsmittel, im Allgemeinen Luftsauerstoff, räumlich vom Reduktionsmittel trennt. Auf die gasdichte, elektrisch isolierende, protonenleitende Membran ist auf der Anoden- und Kathodenseite eine Katalysatorschicht aufgebracht, die die Elektroden ausbildet und die in der Regel Platin als katalytisch aktives Metall enthält. In den Katalysatorschichten laufen die eigentlichen Redoxreaktionen und Ladungstrennungen ab. Membran und Katalysatorschichten bilden eine Einheit, die auch als CCM (catalyst coated membrane) bezeichnet wird. Auf beiden Seiten der CCM befindet sich eine Gasdiffusionslage (GDL), die den Zellaufbau stabilisiert und Transport- und Verteilerfunktionen für Reaktionsgase, Wasser, Wärme und Strom übernimmt. Membran, Elektroden und Gasdiffusionslage bilden die Membran-Elektroden-Einheit (MEA, membrane electrode assembly). Zwischen den Membran-Elektroden-Einheiten sind Strömungsverteilerplatten (sogenannte Bipolarplatten) angeordnet, die Kanäle zur Versorgung der angrenzenden Kathode und Anode mit Prozessgasen sowie in der Regel zusätzlich innenliegende Kühlkanäle aufweisen.

Gasdiffusionslagen für Brennstoffzellen bestehen typischerweise aus einem Kohlefaser-Substrat, welches mit Fluor-Polymeren (z. B. PTFE) hydrophob ausgerüstet ist und anschließend mit einer mikroporösen Lage (MPL) flächig beschichtet wird. Die MPL besteht in der Regel aus einem fluorhaltigen Polymer als Binder (z. B. PTFE) sowie einem elektrisch leitfähigen Material, wobei häufig Kohlenstoffmaterialien, wie Ruß oder Graphit-Pulver, verwendet werden. Den Gasdiffusionslagen kommt eine wesentliche Bedeutung für die Funktion und Leistungsfähigkeit der Brennstoffzelle zu. Durch sie werden zum einen die in den Elektrodenreaktionen verbrauchten und entstehenden Prozesskomponenten transportiert und zum anderen die in den Halbzellenreaktionen gebildeten und verbrauchten Elektronen und die bei der Reaktion gebildete Wärme zu den Strömungsverteilerplatten geleitet. Zudem wirkt die GDL auch als mechanischer Ausgleich zwischen der makrostrukturierten Strömungsverteilerplatte und den Katalysatorschichten. Dazu müssen Bauteiltoleranzen ausgeglichen und der Kompressionsdruck verteilt werden. Die GDL dient auch als mechanischer Schutz der sehr dünnen Membranen, die in den Brennstoffzellen hohen Lasten ausgesetzt sind. Die empfindlichen Membranen sollen möglichst nicht durch die Gasdiffusionslage und ihre Komponenten beschädigt werden. Daher werden an die mechanischen Eigenschaften und die Oberflächeneigenschaften der GDL hohe Anforderungen gestellt.

Ein großes Problem bei faserbasierten Gasdiffusionslagen besteht in einer möglichen Schädigung der Membran der Brennstoffzelle durch lose Fasern und Fasern, die nicht in das flächige Fasersubstrat, sondern in die MPL (d.h. in die der Membran zugewandten Schicht) eingebunden sind. Problematisch sind insbesondere Fasern, die aus der MPL-Oberfläche herausstehen. Dazu zählen solche, die bereits vor dem Einbau der GDL in den Brennstoffzellenstapel aus der MPL-Oberfläche hervorstehen und solche, die, wenn die GDL einer Druckbelastung ausgesetzt wird, wie sie bei der Herstellung der Brennstoffzellenstapel auftritt, aus der Oberfläche der MPL heraustreten. Die Fasern der Gasdiffusionslagen sind üblicherweise sehr steif und spröde und die Faserdicke liegt oft im Bereich der Dicke der Brennstoffzellenmembran. Somit besteht die Gefahr, dass die Membran durch Fasern penetriert und ein Kurzschluss verursacht wird. Im schlimmsten Fall kann ein Kurzschluss durch eine Faserpenetration der Membran zum Funktionsausfall des kompletten Brennstoffzellenstapels führen. Dies ist ein sehr großes Risiko für die Lebensdauer der Brennstoffzellen.

Die Membran einer Brennstoffzelle ist sehr dünn, üblicherweise nur wenige µm dick. Typische Dicken bewegen sich im Bereich von 8 bis 50 µm, wobei teilweise bereits Membranen mit Dicken von 5 µm getestet werden. Es ist zu erwarten, dass mit zunehmendem Einsatz von Brennstoffzellen in automobilen Anwendungen ein Bedarf daran besteht, dass die Dicke aller flächigen Komponenten (Membranen, GDL/MPL, etc.) weiter abnimmt. Somit wird sich zukünftig das Performance-Problem durch interne Kurzschlüsse eher vergrößern, die durch herausstehende Fasern, sonstige erhabenen Strukturen oder allgemein Druckpunkte der auf der Membran aufliegenden GDLs hervorgerufen werden können. Die Vermeidung solcher kritischen Strukturen und/oder die Glättung der MPL-Oberflächen der GDL sind deshalb sehr wichtige Ziele bei der Entwicklung von optimierten Gasdiffusionslagen.

Bisher wird zur Erkennung von herausstehenden Fasern und anderen Mängeln, die zu einer Beschädigung der Membranen führen können, eine vollflächige optische Inspektion und Nachkontrolle der GDL-Oberfläche durch automatisierte Inspektionssysteme durchgeführt. Als fehlerhaft identifizierte Bereiche werden dann beim Zuschnitt entfernt. Nachteilig an diesem Verfahren ist die hohe Abhängigkeit der Detektionsgenauigkeit vom Lichteinfall und dem Kamerawinkel zu der zu inspizierenden Oberfläche. Es besteht die Wahrscheinlichkeit, dass eine gewisse Anzahl an kritischen Stellen nicht erfasst und detektiert wird. Das mechanische Entfernen von kritischen Bereichen der GDL durch Zuschnitt führt zudem zu einem hohen Verlust an Material und mindert die Ausbeute. Auch der Zuschnitt kann Ursache für Fehler sein, da ein unsauberer Zuschnitt oder der Einsatz von stumpfen Stanzwerkzeugen zu ausgefransten Rändern führen kann.

Die Entwicklung von alltagstauglichen Brennstoffzellen ist ein wichtiger Beitrag bei der Energiewende von fossilen Brennstoffen zu nachhaltigen Energiespeichern und Energiewandlern. Es besteht daher aktuell ein großer Bedarf an PEM-Brennstoffzellen, deren Ausfallwahrscheinlichkeit aufgrund von Membranschädigungen und speziell Kurzschlüsse durch lose Fasern aufgrund von in die MPL eingebetteten oder aus dieser herausstehenden Fasern substantiell verringert ist.

Die JP 2007242378 A (JP 5041459 B2) beschreibt eine Gasdiffusionsschicht, die aus porösen gesinterten Kohlenstoffteilchen und wasserabweisenden Teilchen besteht. Zu ihrer Herstellung werden Kohlenstoffpartikel und wasserabweisende Partikel in Gegenwart eines nichtionischen Tensids in Wasser dispergiert, unter Phaseninversion aufkonzentriert und gesintert. Dieser gesinterte Film wird abgezogen, wieder pulverisiert und die resultierenden gesinterten groben Partikel in einer Form heiß zu einer GDL gepresst. Somit kann auf die Verwendung eines faserbasierten Substrats in der finalen GDL verzichtet werden, so dass die zuvor beschriebenen Probleme infolge loser und in der membrannahen Schicht befindlichen Fasern nicht besteht. Eine solche Vorgehensweise führt jedoch voraussichtlich zu Nachteilen in der weiteren Verarbeitung, beim Zuschnitt und der Herstellung der Zellstapel, sowie der Stabilität in der Brennstoffzelle.

Die US 2019/0344405 A1 (US 11141839 B2) beschreibt eine Klebevorrichtung zum Verkleben einer Gasdiffusionsschicht innerhalb einer Brennstoffzelle. Diese Vorrichtung verfügt über eine Saugvorrichtung und soll flauschige bzw. lockere Fasern einer Gasdiffusionsschicht binden oder beseitigen. Der Einsatz eines zusätzlichen Geräts erhöht die Herstellungskosten. Zudem ist fraglich, dass mit dem Einsatz dieser Vorrichtung das Problem der internen Kurzschlüsse gelöst wird, die durch herausstehende Fasern der auf der Membran aufliegenden GDLs hervorgerufen werden.

Die EP 3276718 A1 beschreibt ein poröses Kohlenstoffelektrodensubstrat, das beim Einsatz in einer Brennstoffzelle kaum Kurzschlüsse verursachen soll. Dabei wird das Auftreten von Kohlenstofffasern, die aus der Substratoberfläche vorstehen oder zum Vorstehen gebracht werden, wenn das Kohlenstoffelektrodensubstrat unter Druck gesetzt wird, sowie kurze Kohlenstofffasern, die unzureichend an der Substratoberfläche gebunden sind, vermieden. Zur Herstellung werden kurze Carbonfasern und ein Binderharz eingesetzt, das einen Kohlenstoffgehalt von wenigstens 35 Gew.-% enthält und das unter Erhitzen carbonisiert. Das resultierende GDL-Substrat basiert somit auf einem vollständig harzgetränkten Fasermaterial.

Die WO 2020/165075 A1 (EP 3924536 A1) beschreibt ein Verfahren zur Herstellung einer Gasdiffusionsschicht, das die folgenden Schritte umfasst:
a) Herstellung einer Träger-Bindemittel-Paste, die ein Lösungsmittel, ein fluoriertes Bindemittel und leitfähige Trägerteilchen enthält,
b) Herstellung einer adhäsiven Zusammensetzung, umfassend
   - ein Lösungsmittel,
   - ein fluoriertes Bindemittel und
   - im Wesentlichen keine oder höchstens 15 Gew.-% leitfähige Trägerteilchen, bezogen auf das Gesamtgewicht des fluorierten Bindemittels und aller leitfähigen Trägerteilchen; und
c) Kombinieren einer Schicht des Trägermaterials, einer Schicht der adhäsiven Zusammensetzung und einer Schicht der Träger-Bindemittel-Paste, wobei die Schicht der adhäsiven Zusammensetzung zwischen der Schicht des Trägermaterials und der Schicht der Träger-Bindemittel-Paste aufgebracht wird, und Pressen der Kombination aus Trägermaterial, adhäsiver Zusammensetzung und Träger-Bindemittel-Paste bei einem Druck von mindestens 15 Kilopascal (0,15 bar) und/oder Erhitzen der Kombination aus Trägermaterial, adhäsiver Zusammensetzung und Träger-Bindemittel-Paste auf eine Temperatur von mindestens 300°C.

Diesem Dokument liegt die Aufgabe zugrunde, mechanisch stabile Gasdiffusionselektroden bereit zu stellen, bei denen die Träger-BindemittelSchicht, die vorzugsweise als mikroporöse Schicht ausgebildet ist, fest mit dem Trägermaterial verbunden ist. Dies wird durch die zusätzliche adhäsive Schicht erzielt, die frei von elektrisch leitfähigen Teilchen ist oder diese nur in geringer Menge enthält. Es ist kritisch für das Verfahren, dass alle drei Schichten, Trägermaterial, adhäsive Schicht und mikroporöse Schicht gemeinsam bei hohem Druck und einer Temperatur von wenigstens 300°C, verpresst werden, wobei lange Behandlungszeiten von wenigstens 15 Minuten und bevorzugt 1 bis 4 Stunden eingesetzt werden. Es ist nicht beschrieben, zunächst auf das Trägermaterial eine erste gas- und wasserdurchlässige Polymerschicht aufzutragen, anschließend diese einer Nachbehandlung bei erhöhtem Druck und gegebenenfalls erhöhter Temperatur unterziehen und anschließend die Polymerschicht des so erhaltenen Materials mit einer mikroporösen Lage zu beschichten.

Die EP 3396753 A1 beschreibt eine Gasdiffusionselektrode, die weniger anfällig für das Auftreten eines Kurzschlussstroms sein soll, wenn sie in einer Brennstoffzelle verwendet wird. Dabei umfasst das GDL-Substrat Kohlenstoff-Kurzfasern, die mit einem Kohlenstoff-Harz gebunden sind, wobei die Gasdiffusionselektrode einen mehrschichtigen Aufbau mit vorzugsweise wenigstens zwei mikroporösen Schichten aufweist, die sich in ihrer Schichtfüllrate unterscheiden, und wobei die mikroporöse(n) Schicht(en) ausreichende Dicken unter Druckbelastung aufweisen müssen. Um die Kurzschlusswahrscheinlichkeit zu reduzieren sind eine Vielzahl von Maßnahmen beschrieben, z.B. Druckbehandlung des Precursor-Substrats vor der Carbonisierung des Binderharzes und die Erhöhung der Temperatur im Carbonisierungsschritt. Nur für den Fall, dass eine weitere Reduktion der Kurzschlussstromdichte erwünscht ist, ist eine Nachbehandlung durch Kalandrieren, gefolgt von Blasen mit Luft und Absaugen der Luft, beschrieben. Nachteilig an diesem Verfahren ist, dass ein Harzbinder im Fasersubstrat oftmals unerwünscht ist.

Die EP 3957789 A1 beschreibt eine Gasdiffusionslage für eine PEM-Brennstoffzelle, umfassend einen Kohlenfaser-Vliesstoff, der Fasern mit einem mittleren Faser-Durchmesser von 5 bis 20 µm enthält. Wenigstens ein Teil der Kohlenstofffasern weist dabei einen flachen Bereich auf. In diesen flachen Teilen ist in einer ebenen Ansicht der Oberfläche des Kohlenstofffaser-Vliesstoffs der maximale Faserdurchmesser 10 bis 50% größer als der durchschnittliche Faserdurchmesser. Somit weist die GDL eine vergrößerte Kontaktfläche mit den Bipolarplatten auf und hat eine verbesserte thermische Leitfähigkeit.

Die DE 10 2020 121 892 A1 beschreibt eine Gasdiffusionslage für Brennstoffzellen mit verbesserten Biegeeigenschaften. Die Gasdiffusionslage umfasst ein Kohlefaser-Material und darauf aufgebracht und/oder darin eingebracht wenigstens ei fluorhaltiges Polymer und wenigstens ein davon verschiedenes Polymer, ausgewählt unter Polyetherketonen, Polyphenylensulfiden, Polysulfonen, Polyethersulfonen, teilaromatischen (Co)polyamiden, Polyimiden, Polyamidimiden, Polyetherimiden und Mischungen davon.

Die KR 10 2022 0153522 A beschreibt eine Gasdiffusionslage für Brennstoffzellen auf Basis von Recycling-Carbonfasern. Zur hydrophoben Ausrüstung wird das Carbonfasersubstrat unter Druck mit einer wässrigen Dispersion eines Fluorpolymers imprägniert. Der Auftrag einer separaten Polymerschicht auf dem Fasersubstrat ist nicht beschrieben.

Die CN 112310413 A beschreibt eine Gasdiffusionslage und ein Verfahren zu ihrer Herstellung. Die GDL umfasst eine Trägerschicht (support layer) und darauf übereinander angeordnet eine Diffusionsschicht aus einem Kohlenstoff-Komposit-Material (carbon material diffusion layer) und eine mikroporöse Lage (microporous layer). Die Trägerschicht ist porös und bevorzugt ausgewählt unter Schichten aus Kohlenstoffnanoröhren (CNT), Graphen-Schichten und Kohlefaser-Vliesstoffen. Speziell werden zur Herstellung der Trägerschicht Kohlefasern als Gerüstmaterial und Kohlenstoffnanoröhren als Füllstoff eingesetzt. Es wird in diesem Dokument nicht beschrieben, in der Trägerschicht Kohlenstofffasern einzusetzen, zu deren Herstellung als Ausgangsmaterial Polyacrylnitril-Fasern eingesetzt werden.

Nach der Lehre der CN 112310413 A enthält die Diffusionsschicht zwingend Kohlenstoffnanoröhren und Kohlefasern. Zur Herstellung der Diffusionsschicht kann die Trägerschicht mit einer Zusammensetzung beschichtet werden, die eine Kohlefaserdispersion, eine Kohlenstoffnanoröhrendispersion, einen Binder und ein Hydrophobiermittel enthält, wobei es sich bei dem Hydrophobiermittel um ein fluorhaltiges Polymer, wie PTFE, handeln kann. Nach dem Auftragen kann die Diffusionsschicht einer Nachbehandlung unterzogen werden, wobei unter Anderem eine Behandlung bei erhöhtem Druck und eine Trocknung beschrieben ist.

Der Erfindung liegt die Aufgabe zugrunde, eine Gasdiffusionslage auf Basis eines flächigen elektrisch leitfähigen Fasermaterials und einer mikroporösen Lage und ein Verfahren zu ihrer Herstellung bereit zu stellen, wobei der Anteil an Fasern, die bei einem Einsatz der Gasdiffusionslage in einer PEM-Brennstoffzelle zu einer Schädigung der Membran führen können, gegenüber herkömmlichen Gasdiffusionslagen deutlich verringert ist. Insbesondere soll der Gesamtanteil an losen, nicht ausreichend mit dem Fasermaterial verbundenen Fasern, an Fasern, die aus der MPL-Oberfläche hervorstehen und an Fasern, die in die MPL eingebettet sind, aber zum Herausstehen gebracht werden, wenn die Gasdiffusionslage einer Druckbelastung ausgesetzt ist, deutlich reduziert werden. Somit soll bei einem Einsatz der Gasdiffusionslage in einer PEM-Brennstoffzelle die Häufigkeit an Kurzschlüssen, die durch eine Faserpenetration der Membran verursacht werden, deutlich verringert werden.

Überraschenderweise wurde nun gefunden, dass diese Aufgabe gelöst wird, wenn zur Herstellung einer Gasdiffusionslage für eine Brennstoffzelle ein flächiges elektrisch leitfähiges Fasermaterial A) zunächst mit einer gas- und wasserdurchlässigen Polymerschicht beschichtet, das so erhaltene beschichtete Fasermaterial einer Nachbehandlung bei erhöhtem Druck und gegebenenfalls erhöhter Temperatur unterzogen und anschließend auf die Polymerschicht des so erhaltenen Materials eine mikroporöse Lage aufgebracht wird.

### ZUSAMMENFASSUNG DER ERFINDUNG

Ein erster Gegenstand der Erfindung ist ein Verfahren zur Herstellung einer Gasdiffusionslage für eine Brennstoffzelle, umfassend
A) ein flächiges elektrisch leitfähiges Fasermaterial,
B) eine gas- und wasserdurchlässige Polymerschicht auf wenigstens einer der Flächen des Fasermaterials,
C) eine mikroporöse Lage auf wenigstens einer der gas- und wasserdurchlässigen Polymerschichten, wobei die mikroporöse Lage leitfähige Partikel in einer Matrix aus einem polymeren Bindemittel enthält,
bei dem man
i) ein flächiges elektrisch leitfähiges Fasermaterial A) bereitstellt,
ii) das in Schritt i) bereitgestellte Fasermaterial mit einem Beschichtungsmittel zur Ausbildung einer gas- und wasserdurchlässigen Polymerschicht beschichtet,
iii) das in Schritt ii) erhaltene beschichtete Fasermaterial einer Nachbehandlung bei erhöhtem Druck und gegebenenfalls erhöhter Temperatur unterzieht, und
iv) die Polymerschicht des in Schritt iii) erhaltenen Materials mit einem Precursor zur Ausbildung einer mikroporösen Lage beschichtet.

Ein weiterer Gegenstand der Erfindung ist eine Gasdiffusionslage für eine Brennstoffzelle, die durch ein Verfahren, wie zuvor und im Folgenden definiert, erhältlich ist.

Ein weiterer Gegenstand der Erfindung ist eine Gasdiffusionslage für eine Brennstoffzelle, die
A) ein flächiges elektrisch leitfähiges Fasermaterial,
B) eine gas- und wasserdurchlässige Polymerschicht auf wenigstens einer der Flächen des Fasermaterials,
C) eine mikroporöse Lage auf wenigstens einer der gas- und wasserdurchlässigen Polymerschichten, wobei die mikroporöse Lage leitfähige Partikel in einer Matrix aus einem polymeren Bindemittel enthält,
umfasst.

Ein weiterer Gegenstand der Erfindung ist eine Brennstoffzelle, die wenigstens eine Gasdiffusionslage umfasst, wie sie zuvor und im Folgenden definiert wird, oder die wenigstens eine Gasdiffusionslage umfasst, die durch ein Verfahren, wie es zuvor und im Folgenden definiert wird, erhältlich ist.

Ein weiterer Gegenstand der Erfindung ist die Verwendung einer Gasdiffusionslage, wie in zuvor und im Folgenden definiert, oder erhältlich durch ein Verfahren, wie zuvor und im Folgenden definiert, in einer Protonenaustauschmembran-Brennstoffzelle. Eine spezielle Ausführungsform ist eine Protonenaustauschmembran-Brennstoffzelle, umfassend
- eine Protonenaustauschmembran, die beidseitig mit einer katalytisch aktiven Elektrode beschichtet ist,
- auf jeder Seite der katalysatorbeschichteten Membran eine Gasdiffusionslage, deren Innenseite mit der katalytisch aktiven Elektrode in Kontakt ist,
- auf jeder Seite der katalysatorbeschichteten Membran eine Strömungsverteilerplatte, die Kanäle zur Zuführung von Eduktgasen und Abführung von Produkten der Zellreaktion aufweist, wobei die Kanäle mit der Außenseite der Gasdiffusionslage in Kontakt sind.

Ein weiterer Gegenstand der Erfindung ist ein Brennstoffzellstapel, umfassend eine Vielzahl von Brennstoffzellen, wie zuvor und im Folgenden definiert.

Ein weiterer Gegenstand der Erfindung ist die Verwendung einer Gasdiffusionslage, umfassend
A) ein flächiges elektrisch leitfähiges Fasermaterial,
B) eine gas- und wasserdurchlässige Polymerschicht auf wenigstens einer der Flächen des Fasermaterials,
C) eine mikroporöse Lage auf wenigstens einer der gas- und wasserdurchlässigen Polymerschichten, wobei die mikroporöse Lage leitfähige Partikel in einer Matrix aus einem polymeren Bindemittel enthält, in einer Brennstoffzelle zur Verringerung der Ausfallwahrscheinlichkeit im Betrieb, speziell zur Verringerung der Wahrscheinlichkeit eines Durchstoßes der Brennstoffzellenmembran, spezieller zur Verringerung der Shorting Number.

### BESCHREIBUNG DER ERFINDUNG

Die erfindungsgemäßen und nach dem erfindungsgemäßen Verfahren erhaltenen Gasdiffusionslagen haben folgende Vorteile:
- Die erhaltenen Gasdiffusionslagen verfügen über sehr guten Oberflächeneigenschaften.
- Die zur Herstellung von Gasdiffusionslagen eingesetzten Fasermaterialien, speziell Vliesstoffe, können produktionsbedingt rauere oder feinere Oberflächen aufweisen, wobei raue Fasermaterialien eine höhere Anzahl von nicht in das Fasermaterial eingebundenen Fasern aufweisen als feine. Es existieren auch Fasermaterialien, die eine raue Seite und eine feine (weniger raue) Seite aufweisen. Das erfindungsgemäße Verfahren eignet sich zur Verbesserung der Oberflächeneigenschaften sowohl von Fasermaterialien mit rauen als auch feinen Oberflächen sowie jeweils einer oder beiden Seiten von Fasermaterialien mit einer feinen und einer rauen Seite.
- Bei den erfindungsgemäßen Gasdiffusionslage ist der Anteil an Fasern, die bei einem Einsatz der Gasdiffusionslage in einer PEM-Brennstoffzelle zu einer Schädigung der Membran führen können, gegenüber herkömmlichen Gasdiffusionslagen (ohne zusätzliche Polymerbeschichtung und ohne Nachbehandlung bei erhöhtem Druck, z.B. durch Pressen oder Kalandrieren) deutlich verringert. Insbesondere ist der Gesamtanteil an losen, nicht ausreichend mit dem Fasermaterial verbundenen Fasern, an Fasern, die aus der MPL-Oberfläche hervorstehen und an Fasern, die in die MPL eingebettet sind, aber bei einer Druckbelastung zum Herausstehen gebracht werden, deutlich reduziert.
- Bei einem Einsatz der Gasdiffusionslage in einer PEM-Brennstoffzelle wird die Häufigkeit an Kurzschlüssen, die durch eine Faserpenetration der Membran verursacht werden, deutlich verringert.

Im Rahmen der Erfindung bezeichnet ein Vlies allgemein ein Flächengebilde, das mehrheitlich aus vereinzelten Fasern besteht, deren Zusammenhalt im Wesentlichen nur durch die ihnen eigene Haftung gegeben ist. Die Umwandlung eines Vlieses in einen Vliesstoff durch das Erzeugen eines festeren Verbundes zwischen den Fasern als er im Vlies vorliegt, erfolgt durch Verfahren der Vliesverfestigung, die meist in mechanische, chemische und thermische Verfahren unterteilt werden. Vliese, Vliesstoffe und Verfahren zu ihrer Herstellung sind in H. Fuchs, W. Albrecht, Vliesstoffe, 2. Auflage, Wiley-VCH, Weinheim, Germany beschrieben.

Gasdiffusionslagen werden im Folgenden auch als GDL und mikroporöse Lagen als MPL bezeichnet.

Zur Beschreibung des flächigen Fasermaterials A), der daraus hergestellten Zwischenprodukte und der erfindungsgemäßen Gasdiffusionslage kann ein orthogonales Koordinatensystem verwendet, wobei die Grundfläche des Fasermaterials in der von der x-Achse und der y-Achse aufgespannten Ebene (auch als x,y-Ebene bezeichnet) liegt. Die dazu orthogonale z-Achse dient zur Beschreibung der Dicke des Materials oder einzelner seiner Schichten. Gemäß der für Faserverbundmaterialien üblichen Beschreibung werden die x-Achse auch als Rollenrichtung (machine direction, MD) und die y-Achse als Gegenrollenrichtung (cross machine direction, CMD oder CD) beschrieben. In Richtung der z-Achse erfolgt im Wesentlichen der Stofftransport zwischen Strömungsverteilerplatte (Bipolarplatte) und Membran.

Die Bestimmung der Dicke des leitfähigen flächigen Fasermaterials und der Gasdiffusionslage kann nach der DIN 53855-1:1993-08 "Bestimmung der Dicke textiler Flächengebilde" erfolgen.

Die Bestimmung der Dicke der gas- und wasserdurchlässigen Polymerschicht B) kann auch durch Vermessung eines Querschnitts der GDL entlang der z-Achse (d.h. Vermessung senkrecht zu Oberfläche der GDL bzw. in der Draufsicht auf die x,z-Ebene oder die y,z-Ebene) erfolgen. Dazu kann z.B. ein Rasterelektronenmikroskop (scanning electron microscope, SEM) eingesetzt werden. In einer speziellen Ausführung erfolgt diese Vermessung bei einer Vergrößerung von 200x und einer Beschleunigungsspannung von 15.0 kV. Falls sich die Polymerschicht B) teilweise innerhalb und teilweise außerhalb des Fasermaterials A) befindet, so wird auch der Anteil der Polymerschicht B), die sich innerhalb des Fasermaterials A) befindet, bei der Bestimmung der Dicke der Polymerschicht B) berücksichtigt. Im Allgemeinen lagern sich die zur Herstellung der Schicht B) eingesetzten Polymere im Inneren des Fasermaterials A) um die Fasern an. Die Eindringtiefe lässt sich über die Auftragsmenge des Polymers, die Viskosität der Polymerdispersion und die Druck- und Temperaturbedingungen der Nachbehandlung in Schritt iii) gut steuern. Somit sind die Grenzen der Polymerschicht B) im Allgemeinen gut zu detektieren, so dass bei Durchführung mehrerer Messungen an verschiedenen Stellen und Mittelwertbildung, die Dicke der Polymerschicht B) mit guter Genauigkeit bestimmt werden kann.

Die Bestimmung der flächenbezogenen Masse in g/m² kann nach ISO 9073-1 bzw. EN 29073-1:1992 erfolgen.

Die Bestimmung der Porosität der GDL kann mittels Quecksilberporosimetrie erfolgen, wie dies in der DIN ISO 15901-1:2019-03 und ISO 15901-1:2016-Teil 1: Quecksilberporosimetrie, beschrieben ist.

Die Bestimmung der Rauheit erfolgt nach dem Tastschnittverfahren, wie es in der DIN 4768-1:1974-08 mit dem Titel "Ermittlung der Rauheitsmeßgrößen Rₐ, R_{z}, Rₘₐₓ mit elektrischen Tastschnittgeräten; Grundlagen" beschrieben ist. Dabei bezeichnet der Mittenrauwert Rₐ den mittleren Abstand eines Messpunktes auf der Oberfläche zur Mittellinie und R_{z} bezeichnet die gemittelte Rautiefe. Die Messungen können z.B. mit einem zur Bestimmung der Rauheit geeigneten Digitalmikroskop, wie z.B. Keyence VHX-7000, durchgeführt werden. Die Werte sind jeweils Durchschnittswerte aus 6 Bestimmungen: 3 in Maschinenrichtung (MD) und 3 senkrecht zur Maschinenrichtung (CD).

### Schritt i) Bereitstellen eines flächigen, leitfähigen Fasermaterials A)

In Schritt i) des erfindungsgemäßen Verfahrens wird ein flächiges elektrisch leitfähiges Fasermaterial A) bereitstellt.

Bei dem erfindungsgemäß eingesetzten flächigen elektrisch leitfähigen Fasermaterial A), den daraus hergestellten Zwischenprodukten und der erfindungsgemäßen Gasdiffusionslage handelt es sich um flächenförmige Gebilde, die über eine im Wesentlichen zweidimensionale, ebene Ausdehnung und eine demgegenüber geringere Dicke verfügen. Sie weisen eine Grundfläche auf, die in der Regel im Wesentlichen der Grundfläche der angrenzenden Membran mit den Katalysatorschichten und der Grundfläche der angrenzenden Strömungsverteilerplatte entspricht. Die Form der Grundfläche der das Fasermaterials A) und der Gasdiffusionslage kann beispielsweise polygonal (n-eckig mit n ≥3, z. B. dreieckig, viereckig, fünfeckig, sechseckig, etc.), kreisförmig, kreissegmentförmig (z. B. halbkreisförmig), ellipsenförmig oder ellipsensegmentförmig sein. Bevorzugt ist die Grundfläche rechteckig oder kreisförmig.

Bevorzugt umfasst die Komponente A) ein Fasermaterial, das ausgewählt ist unter Vliesen, Papieren, Geweben und Kombinationen davon. Geeignete Substratmaterialen sind Fasermaterialen, die selbst leitfähig sind oder durch Zugabe leitfähiger Additive, wie Kohlenstoff- oder Metallpartikel, leitfähig gemacht werden. Als Substratmaterial eignen sich prinzipiell Kohlenstofffasern, Glasfasern, Fasern organischer Polymere, wie Polypropylen, Polyester, Polyphenylensulfid, Polyetherketonen, und Mischungen davon. Die in dem Fasermaterial A) enthaltenen Fasern umfassen oder bestehen vorzugsweise aus Kohlenstofffasern (Kohlefasern, Carbonfasern). Solche Fasermaterialien erfüllen besonders vorteilhaft die Anforderung an die GDL nach Gasdiffusivität, Flüssigwasserpermeabilität, elektrischer und thermischer Leitfähigkeit.

Die Herstellung der Kohlenstofffasern kann in üblicher Weise erfolgen, wobei als Ausgangsmaterial vorzugsweise Polyacrylnitril-Fasern (PAN-Fasern) eingesetzt werden. PAN-Fasern werden hergestellt durch radikalische Polymerisation einer Monomerzusammensetzung, die vorzugsweise wenigstens 90 Gew.-%, bezogen auf das Gesamtgewicht der zur Polymerisation eingesetzten Monomere, Acrylnitril enthält. Die erhaltene Polymerlösung wird, z. B. durch Nassspinnen und Koagulation, zu Filamenten versponnen und zu Tauen zusammengefasst. Bevor dieser PAN-Precursor unter hohen Temperaturen zu Kohlenstoffasern umgewandelt wird, wird er in der Regel in einer sauerstoffhaltigen Atmosphäre bei erhöhten Temperaturen von etwa 180 bis 300 °C einer oxidativen Cyclisierung (auch kurz als Oxidation bezeichnet) unterzogen. Durch die dabei resultierende chemische Vernetzung wird die Formstabilität der Fasern verbessert. Anschließend erfolgt bei Temperaturen von wenigstens 1200 °C die eigentliche Pyrolyse zu Kohlenstofffasern. Für diese Pyrolyse können in Abhängigkeit von der Form des angestrebten Fasermaterials entweder die Ausgangsfasern oder bereits ein flächiges Fasermaterial eingesetzt werden. In Abhängigkeit von der Temperatur bei der Pyrolyse unterscheidet man zwischen Carbonisierung und Graphitisierung. Carbonisierung bezeichnet eine Behandlung bei etwa 1200 bis 1500 °C unter Inertgasatmosphäre, die zur Abspaltung flüchtiger Produkte führt. Durch Graphitisierung, d. h. Erhitzen auf etwa 2000 bis 3000 °C unter Inertgas, erhält man so genannte Hochmodul- oder Graphitfasern. Diese Fasern verfügen über eine hohe Reinheit, sind leicht, hoch fest und sehr gut leitfähig für Elektrizität und Wärme.

Das Fasermaterial A) ist vorzugsweise ausgewählt unter Kohlefaser-Vliesstoffen, Kohlefaser-Geweben, Kohlefaser-Papieren und Kombinationen davon. In einer bevorzugten Ausführungsform umfasst das Fasermaterial A) wenigstens einen Kohlefaser-Vliesstoff oder besteht das Fasermaterial A) aus einem Kohlefaser-Vliesstoff. Diese sind unter Anderem vorteilhaft, da sie kompressionselastisch sind und einfach großtechnisch, z. B. in einem Rolle-zu-Rolle-Verfahren, hergestellt werden können.

Bei Kohlefasergeweben wird das flächige Fasermaterial durch das Verkreuzen von zwei Fadensystemen, Kette (Kettfäden) und Schuss (Schussfäden), hergestellt. Wie bei Textilien werden Faserbündel flexibel, aber unlösbar miteinander verbunden. Zur Herstellung von Kohlefasergeweben werden vorzugsweise oxidierte, aber noch nicht karbonisierte oder graphitierte PAN-Fasern eingesetzt. Die Karbonisierung oder Graphitierung, um dem flächigen Fasermaterial elektrische Leitfähigkeit zu verleihen, erfolgt nach dem Weben.

Wie eingangs beschrieben, werden zur Herstellung von Kohlefaser-Papieren in der Regel oxidierte PAN-Fasern eingesetzt. Diese werden in an sich bekannter Weise zu Faserbruchstücken zerkleinert, aufgeschlämmt und analog zur Papierherstellung durch Abtrennung der Fasern aus der Bütte mit Sieben ein Fasergelege hergestellt und getrocknet. In einer bevorzugten Ausführung wird in das Papier zusätzlich wenigstens ein Bindemittel eingebracht. Geeignete Bindemittel sind z. B. Phenol-, Furan-, Polyimidharze, etc. Zum Einbringen des Bindemittels kann das Papier mit diesem imprägniert und das Bindemittel gegebenenfalls anschließend gehärtet werden. Nach dem Imprägnieren und Härten wird das Kohlefaser-Papier nochmals einer Karbonisierung/Graphitisierung unterzogen, um auch das Bindemittel in Verbindungen mit verbesserter elektrischer Leitfähigkeit zu überführen. In einer weiteren geeigneten Ausführung wird zur Bereitstellung des Fasermaterials A) ein gefülltes Kohlefaser-Papier eingesetzt. Die Herstellung erfolgt zunächst wie zuvor beschrieben, jedoch wird anstelle des Einbringens eines Bindemittels und der Karbonisierung/Graphitisierung ein Füllstoff aus einem Kohlenstoffmaterial in einem polymeren Binder in das noch feuchte Papier eingebracht. Speziell wird dazu ein Kohlenstoff-PTFE-Füllstoff eingesetzt. Durch diese Füllung wird die thermische und elektrische Leitfähigkeit so erhöht, dass eine Karbonisierung/Graphitisierung entfallen kann.

Zur Herstellung von Kohlefaser-Vliesstoffen können nicht oxidierte oder oxidierte PAN-Fasern eingesetzt werden. Diese können in einem ersten Schritt trocken zu einem Flor gelegt (kardiert) und anschließend zu einem Vliesstoff verfestigt werden. Dies kann beispielsweise durch Wasserstrahlverfilzung (hydro-entangling) erfolgen, wobei die Karbonfasern orientiert, verschränkt und somit mechanisch stabilisiert werden. Gegebenenfalls kann die Dicke des verfestigten Vliesstoffs auf einen gewünschten Wert kalibriert werden. Vliesstoffe auf Basis nicht oxidierter PAN-Fasern werden nach dem Vlieslegen und Verfestigen zunächst der Oxidation bei erhöhter Temperatur und unter Sauerstoffatmosphäre und anschließend der Karbonisierung/Graphitisierung unter Inertgasatmosphäre unterzogen. Vliesstoffe auf Basis oxidierter PAN-Fasern werden nach dem Vlieslegen und Verfestigen nur einer Karbonisierung/Graphitisierung unterzogen. Optional kann in das Vlies zusätzlich wenigstens ein Bindemittel eingebracht und dieses gegebenenfalls anschließend gehärtet werden. Geeignete Bindemittel sind die für Kohlefaser-Papiere genannten, speziell Phenolharze. Das Einbringen des Bindemittels kann sich z. B. an die Karbonisierung/Graphitisierung anschließen und das erhaltene imprägnierte Vlies abschließend nochmals karbonisiert/graphitisiert werden.

Wenn das flächige elektrisch leitfähige Fasermaterial A) wenigstens einen Kohlefaser-Vliesstoff aufweist, kann dieser rauere oder feinere Oberflächen oder auch eine raue und eine feine Oberfläche aufweisen. Raue Kohlefaser-Vliesstoff weisen eine höhere Anzahl von nicht in das Fasermaterial eingebundenen Fasern auf als feine. Das erfindungsgemäße Verfahren eignet sich zur Verbesserung der Oberflächeneigenschaften von Kohlefaser-Vliesstoffen mit rauen und/oder feinen Oberflächen.

Bei dem Fasermaterial A) handelt es sich in einer speziellen Ausführungsform um einen Faserverbundwerkstoff. Speziell umfasst der Faserverbundwerkstoff wenigstens ein Fasermaterial und darauf aufgebracht und/oder darin eingebracht
a1) wenigstens ein polymeres Additiv,
a2) gegebenenfalls wenigstens ein leitfähigkeitsverbesserndes Additiv,
a3) gegebenenfalls wenigstens ein weiteres Additiv.

Das polymere Additiv a1) ist vorzugsweise ausgewählt unter fluorhaltigen Polymeren a11), fluorfreien hochtemperaturbeständigen Polymeren a12), davon verschiedenen Polymeren a13) und Mischungen davon.

Um die Transportvorgänge durch die GDL und an den Grenzflächen zu verbessern, kann es vorteilhaft sein, die Hydrophobizität des Fasermaterials A) zu erhöhen. Geeignete polymere Additive a1), die beispielsweise als Bindemittel wirken und gleichzeitig die Hydrophobizität erhöhen, sind fluorhaltige Polymere a11). Prinzipiell geeignet als fluorhaltige Polymere a11) sind die in der Polymerschicht B) eingesetzten fluorhaltigen Polymere b1) und/oder die als polymere Bindemittel der mikroporösen Lage C) eingesetzten fluorhaltigen Polymere c1). Vorzugsweise enthält das Fasermaterial A) dann wenigstens ein fluorhaltiges Polymer a11) darauf aufgebracht und/oder darin eingebracht. Das fluorhaltiges Polymer a11) ist vorzugsweise ausgewählt unter Polytetrafluorethylenen (PTFE), Tetrafluorethylen-Hexafluorpropylen-Copolymeren (FEP), Perfluoralkoxy-Polymeren (PFA) und Mischungen davon. Perfluoralkoxy-Polymere sind z.B. Copolymere aus Tetrafluorethylen (TFE) und Perfluoralkoxyvinylethern, wie Perfluorvinylpropylether. Bevorzugt wird als Polymer a11) ein Polytetrafluorethylen (PTFE) eingesetzt. Das Fasermaterial kann durch übliche Imprägnierungsverfahren mit dem fluorhaltigen Polymer a11) ausgerüstet werden. Dazu kann z.B. eine PTFE-Dispersion in einem Tauchbad appliziert, das Lösungsmittel verdampft und das behandelte Fasermaterial bei erhöhten Temperaturen von in der Regel wenigstens 300 °C gesintert werden.

Bevorzugt beträgt der Massenanteil des polymeren Additivs a1) 0,5 bis 50 %, bevorzugt 1 bis 40 %, bezogen auf die Masse des elektrisch leitfähigen Fasermaterials A). In einer speziellen Ausführung umfasst das polymere Additiv a1) wenigstens ein fluorhaltiges Polymer a11). Bevorzugt beträgt der Massenanteil des fluorhaltigen Polymers a11) dann 0,5 bis 40 %, bevorzugt 1 bis 30 %, bezogen auf die Masse des Fasermaterials A).

Das polymere Additiv a1) kann wenigstens ein fluorfreies, hochtemperaturbeständiges Polymer a12) enthalten, wie sie als Komponente b2) in der Polymerschicht B) und/oder als polymere Bindemittel c2) der mikroporösen Lage C) eingesetzt werden können. Das fluorfreie, hochtemperaturbeständige Polymer a12) ist dann bevorzugt ausgewählt unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon.

In einer speziellen Ausführung enthält das polymere Additiv a1) kein fluorfreies, hochtemperaturbeständiges Polymer a12).

In einer weiteren speziellen Ausführung enthält das polymere Additiv a1) wenigstens ein fluorfreies, hochtemperaturbeständiges Polymer a12). Bevorzugt beträgt der Massenanteil des fluorfreien hochtemperaturbeständigen Polymers a12) dann 0,5 bis 40 %, bevorzugt 1 bis 30 %, bezogen auf die Masse des Fasermaterials A).

In einer weiteren speziellen Ausführung umfasst das Bindemittel a1) eine Mischung aus wenigstens einem fluorhaltigen Polymer a11) und wenigstens einem fluorfreien, hochtemperaturbeständigen Polymer a12). Bevorzugt beträgt der gesamte Massenanteil der Polymere a11) und a12) dann 0,5 bis 40 %, bevorzugt 1 bis 30 %, bezogen auf die Masse des Fasermaterials A).

Das Additiv a1) kann wenigstens ein weiteres von a11) und a12) verschiedenes Polymer a13) umfassen. Geeignete Polymere a13) sind z. B. ausgewählt unter Phenolharzen, Furanharzen, Polyimidharzen und Mischungen davon. Speziell enthält das polymere Additiv a1) von den fluorhaltigen Polymeren a11) und den Polymeren a12) verschiedene weitere Polymere a13) in einem Gewichtsanteil von höchstens 5 %, bevorzugt von höchstens 1 %, besonders bevorzugt von höchstens 0,5 %, insbesondere von höchstens 0,1 %, bezogen auf das Gesamtgewicht des flächigen elektrisch leitfähigen Fasermaterials A), darauf aufgebracht und/oder darin eingebracht. Noch spezieller enthält das Fasermaterial A) keine Zusätze von weiteren Polymeren a13), die von den fluorhaltigen Polymeren a11) und den Polymeren a12) verschieden sind.

Vielfach verfügt das Fasermaterial A) bereits durch die eingesetzten Kohlenstofffasern auch ohne leitfähigkeitsverbessernde Additive über eine gute elektrische und thermische Leitfähigkeit. Zur Verbesserung der elektrischen und der thermischen Leitfähigkeit kann das Fasermaterial A) jedoch zusätzlich mit wenigstens einem leitfähigkeitsverbessernden Additiv a2) ausgerüstet werden. Bevorzugt ist das leitfähigkeitsverbessernde Additiv a2) ausgewählt unter Metallpartikeln, Ruß, Graphit, Graphen, Kohlenstoffnanoröhren (CNT), Kohlenstoffnanofasern und Mischungen davon. Eine spezielle Ausführung sind graphitische Kohlenstoffnanofasern (GCNF). Die Ausrüstung des Fasermaterials A) mit wenigstens einem leitfähigkeitsverbessernden Additiv a2) kann beispielsweise gemeinsam mit dem polymeren Additiv a1) und/oder weiteren Additiven a3) erfolgen.

In einer speziellen Ausführungsform ist das Fasermaterial A) frei von zugesetzten Kohlenstoffnanoröhren. Im Rahmen der Erfindung bedeutet bedeutet "frei von zugesetzten Kohlenstoffnanoröhren", dass Kohlenstoffnanoröhren dem Fasermaterial A) nicht zugesetzt, speziell nicht darauf aufgebracht und/oder darin eingebracht, werden. Es ist bevorzugt, dass das Fasermaterial A) völlig frei von Kohlenstoffnanoröhren ist. Vorzugsweise enthält das Fasermaterial A) Kohlenstoffnanoröhren in einer Menge im Bereich von 0 bis 0,00005 Gew.-%, bezogen auf das Gesamtgewicht des Fasermaterials A), besonders bevorzugt von 0 bis 0,00001 Gew.-%, bezogen auf das Gesamtgewicht des Fasermaterials A), insbesondere von 0 Gew.-%, bezogen auf das Gesamtgewicht des Fasermaterials A).

Bevorzugt weist das Fasermaterial A) einen Gehalt an leitfähigkeitsverbessernden Additiven von 0 bis 40 Gew.-%, bezogen auf das Gesamtgewicht des Fasermaterials A), auf. Wenn das Fasermaterial A) ein leitfähigkeitsverbesserndes Additiv enthält, dann vorzugsweise in einer Menge von 0,1 bis 40 Gew.-%, besonders bevorzugt von 0,5 bis 30 Gew.-%, bezogen auf die Masse des Fasermaterials A).

Das Fasermaterial A) kann zusätzlich wenigstens ein weiteres Additiv a3) enthalten. Dazu zählen z.B. oberflächenaktive Substanzen. Die Ausrüstung des Fasermaterials A) mit wenigstens einem weiteren Additiv a3) kann gemeinsam mit dem polymeren Additiv a1) und/oder leitfähigkeitsverbessernden Additiven a2) erfolgen. Bevorzugt beträgt der Gesamtmassenanteil an weiteren Additiven a3) 0 bis 80 %, bevorzugt 0,1 bis 50 %, bezogen auf die Masse des Fasermaterials A).

In einer speziellen Ausführungsform wird das gegebenenfalls mit den Komponenten a1), a2) und/oder a3) ausgerüstete Fasermaterial A) einer thermischen Behandlung (Trocknung und/oder Sinterung) unterzogen. Die thermische Behandlung des Fasermaterials A) erfolgt vorzugsweise bei einer Temperatur von wenigstens 250 °C, bevorzugt von wenigstens 300 °C, insbesondere in einem Bereich von 300 bis 450 °C. Eine thermische Behandlung kann auch nach dem Auftrag der Polymerschicht B) und/oder der mikroporösen Lage C) erfolgen, wie dies im Folgenden genauer beschrieben wird.

Das Fasermaterial A) weist vorzugsweise eine Dicke im Bereich von 50 bis 500 µm, besonders bevorzugt von 100 bis 400 µm auf. Diese Dicke bezieht sich auf den unkomprimierten Zustand des Fasermaterials A), d. h. vor der Nachbehandlung in Schritt iii) und vor dem Einbau der GDL in eine Brennstoffzelle.

Das Fasermaterial A) weist vorzugsweise eine Porosität im Bereich von 10 bis 90 %, besonders bevorzugt von 20 bis 85 %, auf. Die Bestimmung der Porosität kann mittels Quecksilberporosimetrie gemäß DIN ISO 15901-1:2019-03 und ISO 15901-1:2016- Teil 1 erfolgen.

Der mittlere Porendurchmesser des Fasermaterials A) liegt vorzugsweise in einem Bereich von 5 bis 60 µm, besonders bevorzugt von 8 bis 50 µm, insbesondere von 10 bis 40 µm. Die Bestimmung des mittleren Porendurchmessers kann durch Quecksilber-Porosimetrie erfolgen.

### Schritt ii) Beschichtung mit einer gas- und wasserdurchlässigen Polymerschicht

In Schritt B) des erfindungsgemäßen Verfahrens wird auf wenigstens einer der Flächen des Fasermaterials A) eine gas- und wasserdurchlässige Polymerschicht B) aufgetragen.

Die Polymerschicht B) kann auf einer oder auf beiden Seiten des flächigen elektrisch leitfähigen Fasermaterials A) aufgetragen werden. In einer speziellen Ausführungsform wird die Polymerschicht B) nur auf einer Seite des flächigen elektrisch leitfähigen Fasermaterials A) aufgetragen. Bevorzugt wird die Polymerschicht B) nur auf einer Seite des flächigen elektrisch leitfähigen Fasermaterials A) aufgetragen, um diese dafür zu konfektionieren, membranseitig in eine Brennstoffzelle eingebaut zu werden. In einer speziellen Ausführungsform wird die Polymerschicht B) nur auf einer Seite des flächigen elektrisch leitfähigen Fasermaterials A) aufgetragen und wird diese Seite (im Anschluss an eine Nachbehandlung bei erhöhtem Druck und gegebenenfalls erhöhter Temperatur in Schritt iii)) mit einer mikroporösen Lage C) beschichtet.

Es wurde gefunden, dass sich die Beschichtung mit einer gas- und wasserdurchlässigen Polymerschicht B) zur Verbesserung der Oberflächeneigenschaften sowohl eines Fasermaterials mit einer feinen als auch eines Fasermaterials mit einer rauen Oberfläche eignet. Es wurde weiterhin gefunden, dass eine zusätzliche Nachbehandlung bei erhöhtem Druck und gegebenenfalls erhöhter Temperatur (= Schritt iii)) diesen Effekt signifikant verstärkt.

Bevorzugt umfasst das Beschichtungsmittel zur Ausbildung einer gas- und wasserdurchlässigen Polymerschicht B) wenigstens ein Polymer, ausgewählt unter fluorhaltige Polymeren b1), fluorfreien, hochtemperaturbeständigen Polymeren b2), davon verschiedenen Polymeren b3) und Mischungen davon.

Bevorzugt ist das fluorhaltige Polymere b1) ausgewählt ist unter Polytetrafluorethylen, Tetrafluorethylen-Hexafluorpropylen-Copolymeren, Perfluoralkoxy-Polymeren und Mischungen davon. In einer speziellen Ausführungsform umfasst das fluorhaltige Polymere b1) wenigstens ein Tetrafluorethylen-Hexafluorpropylen-Copolymer (FEP). Speziell enthält das Beschichtungsmittel zur Ausbildung der gas- und wasserdurchlässigen Polymerschicht B) ausschließlich ein Tetrafluorethylen-Hexafluorpropylen-Copolymer (FEP) als fluorhaltiges Polymer b1). Noch spezieller enthält das Beschichtungsmittel zur Ausbildung der Polymerschicht B) ein Tetrafluorethylen-Hexafluorpropylen-Copolymer (FEP) als einzige Polymerkomponente.

Das Polymer b2) ist speziell ausgewählt unter sogenannten Hochleistungskunststoffen, die sich durch Eigenschaften, wie eine hohe Glasübergangstemperatur, eine hohe Schmelztemperatur, gute Temperaturbeständigkeit, gute Chemikalienbeständigkeit und gute mechanische Eigenschaften auszeichnen. Bevorzugt weisen die Polymere b2) eine dauerhafte Betriebstemperatur (Dauergebrauchstemperatur) von wenigstens 150°C auf. Insbesondere handelt es sich bei den Polymeren b2) um Thermoplaste.

Bevorzugt ist das fluorfreie, hochtemperaturbeständige Polymeren b2) ausgewählt unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon.

Bevorzugt als Polymere b2) sind teilaromatische und aromatische Polymere.

Die Polymere b2) sind vorzugsweise ausgewählt unter Polyaryletherketonen (PAEK), Polyphenylensulfiden (PPS), Polysulfonen (PSU), Polyethersulfonen (PES), teilaromatischen (Co)polyamiden (Hochtemperaturpolyamiden, HTPA), Polyimiden (PI), Polyamidimiden (PAI), Polyetherimiden (PEI) und Mischungen (Blends) davon.

Geeignete Polymere b2) sind auch (teil)aromatische Polyester, wie PET oder PBT, Polycarbonate (PC) und temperaturbeständige Melamine, wie mit nanoporösen SiO₂-Aerogelen gefüllte Melaminschäume.

In einer bevorzugten Ausführung umfasst die Polymerkomponente b) wenigstens ein Polyaryletherketon. Speziell besteht die Polmerkomponente b2) aus wenigstens einem Polyaryletherketon. Polyaryletherketone (PAEK) sind teilkristalline Thermoplaste, die einen alternierenden Aufbau aufweisen, bei dem auf eine Arylgruppe jeweils eine Ketogruppe (Carbonylgruppe) oder eine Ethergruppe folgt, wobei die Anteile an den Keto- und Ethergruppen variabel sind und sich im Substitutionsmuster an den Arylringen unterscheiden können. Geeignete Polyaryletherketone b2) sind Polyetherketone (PEK), Polyetheretherketone (PEEK), Polyetherketonketone (PEKK), etc. Bevorzugt umfasst die Polymerkomponente b2) wenigstens ein Polyetheretherketon oder besteht aus wenigstens einem Polyetheretherketon.

Geeignete teilaromatischen (Co)polyamiden b2) sind die als Hochtemperaturpolyamide (HTPA) bezeichneten Polymere. Dabei handelt es sich um teilkristalline oder amorphe, thermoplastische, teilaromatische Polyamide. Bevorzugt enthalten diese wenigstens eine aromatische Dicarbonsäure einpolymerisiert, insbesondere ausgewählt unter Terephthalsäure, Isophthalsäure und Gemischen aus Terephthalsäure und Isophthalsäure. Bevorzugte teilaromatische (Co)polyamide b2) sind ausgewählt unter PA 6.T, PA 10.T, PA 12.T, PA 6.I, PA 10.1, PA 12.1, PA 6.T/6.I, PA 6.T/6, PA 6.T/10T, PA 10.T/6.T, PA 6.T/12.T, PA12.T/6.T und Gemischen davon. Eine weitere spezielle Ausführungsform der Polyamide b2) ist Polyphthalamid (PPA).

Geeignete Polyimide b2) sind Polysuccinimid (PSI), Polybismaleinimid (PBMI), Polyimidsulfon (PISO) und Polymethacrylimid (PMI).

In einer speziellen Ausführung umfasst das Beschichtungsmittel zur Ausbildung der gas- und wasserdurchlässigen Polymerschicht B) eine Mischung aus wenigstens einem fluorhaltigen Polymer b1) und wenigstens einem fluorfreien, hochtemperaturbeständigen Polymer b2).

Die Polymerkomponente b) kann wenigstens ein weiteres von b1) und b2) verschiedenes Polymer b3) umfassen. Geeignete Polymere b3) sind beispielsweise ausgewählt unter Thermoplasten mit einer niedrigeren Schmelztemperatur und/oder einer niedrigeren dauerhaften Betriebstemperatur (Dauergebrauchstemperatur) als die Polymere b2). Bevorzugt sind die Polymere b3) ausgewählt unter Polyolefinen, wie Polyethylen, Polypropylen und Copolymeren und Blends davon. In einer speziellen Ausführung umfasst das Polymer b3) wenigstens ein Polyethylen mit ultrahohem Molekulargewicht (UHMWPE) oder besteht daraus.

Speziell enthält die Polymerkomponente b) von den fluorhaltigen Polymeren b1) und den Polymeren b2) verschiedene weitere Polymere b3) in einem Gewichtsanteil von höchstens 5 %, bevorzugt von höchstens 1 %, besonders bevorzugt von höchstens 0,5 %, insbesondere von höchstens 0,1 %, bezogen auf das Gesamtgewicht der Polymerkomponente b). Noch spezieller enthält die Polymerkomponente b) keine Zusätze von weiteren Polymeren b3), die von den fluorhaltigen Polymeren b1) und den Polymeren b2) verschieden sind.

Zur Verbesserung der elektrischen und der thermischen Leitfähigkeit kann die Polymerschicht B) mit wenigstens einem leitfähigkeitsverbessernden Additiv ausgerüstet werden. Geeignete leitfähigkeitsverbessernde Additive sind die zuvor für das Fasermaterial A) genannten, z. B. Metallpartikel, Kohlenstoffpartikel, etc. Bevorzugt ist das leitfähigkeitsverbessernde Additiv ausgewählt unter Ruß, Graphit, Graphen, Kohlenstoffnanoröhren (CNT), Kohlenstoffnanofasern und Mischungen davon. Eine spezielle Ausführung sind graphitische Kohlenstoffnanofasern (GCNF). Zur Erzielung einer verbesserten Fasereinbindung kann die Polymerschicht B) im Allgemeinen in geringer Dicke und/oder mit geringem Auftragsgewicht bezogen auf den Polymergehalt eingesetzt werden. Daher verfügt die Polymerschicht B) vielfach auch ohne leitfähigkeitsverbessernde Additive über eine gute elektrische und thermische Leitfähigkeit. In einer speziellen Ausführungsform enthält die Polymerschicht B) daher keine zugesetzten leitfähigkeitsverbessernden Additive.

Wenn die Polymerschicht B) wenigstens ein leitfähigkeitsverbesserndes Additiv enthält, so liegt der Gehalt an leitfähigkeitsverbessernden Additiven vorzugsweise in einem Bereich von 0,1 bis 40 Gew.-%, besonders bevorzugt von 0,5 bis 30 Gew.-%, bezogen auf das Gesamtgewicht aus Polymer B) und leitfähigkeitsverbesserndem Additiv.

In einer speziellen Ausführungsform ist die Polymerschicht B) frei von zugesetzten Kohlenstoffnanoröhren, Kohlefasern und Mischungen davon. Im Rahmen der Erfindung bedeutet bedeutet "frei von zugesetzten Kohlenstoffnanoröhren, Kohlefasern und Mischungen davon", dass Kohlenstoffnanoröhren, Kohlefasern und Mischungen davon dem Beschichtungsmittel zur Ausbildung der Polymerschicht B) nicht zugesetzt werden. Es ist bevorzugt, dass die Polymerschicht B) völlig frei von Kohlenstoffnanoröhren, Kohlefasern und Mischungen davon ist. Vorzugsweise enthält die Polymerschicht B) Kohlenstoffnanoröhren, Kohlefasern und Mischungen davon in einer Menge im Bereich von 0 bis 0,00005 Gew.-%, bezogen auf das Gesamtgewicht der Polymerschicht B), besonders bevorzugt von 0 bis 0,00001 Gew.-%, bezogen auf das Gesamtgewicht der Polymerschicht B), insbesondere von 0 Gew.-%, bezogen auf das Gesamtgewicht der Polymerschicht B).

In einer speziellen Ausführungsform ist die Polymerschicht B) frei von zugesetzten elementaren Kohlenstoff enthaltenden Komponenten. Im Rahmen der Erfindung bedeutet bedeutet "frei von zugesetzten elementaren Kohlenstoff enthaltenden Komponenten", dass elementaren Kohlenstoff enthaltende Komponenten dem Beschichtungsmittel zur Ausbildung der Polymerschicht B) nicht zugesetzt werden. Es ist bevorzugt, dass die Polymerschicht B) völlig frei von elementaren Kohlenstoff enthaltenden Komponenten ist. Vorzugsweise enthält die Polymerschicht B) elementaren Kohlenstoff enthaltende Komponenten in einer Menge im Bereich von 0 bis 0,00005 Gew.-%, bezogen auf das Gesamtgewicht der Polymerschicht B), besonders bevorzugt von 0 bis 0,00001 Gew.-%, bezogen auf das Gesamtgewicht der Polymerschicht B), insbesondere von 0 Gew.-%, bezogen auf das Gesamtgewicht der Polymerschicht B).

In einer speziellen Ausführungsform ist die Polymerschicht B) frei von leitfähigkeitsverbessernden Additiven. Im Rahmen der Erfindung bedeutet bedeutet "frei von leitfähigkeitsverbessernden Additiven", dass leitfähigkeitsverbessernde Additive dem Beschichtungsmittel zur Ausbildung der Polymerschicht B) nicht zugesetzt werden. Es ist bevorzugt, dass die Polymerschicht B) völlig frei von leitfähigkeitsverbessernden Additiven ist. Vorzugsweise enthält die Polymerschicht B) leitfähigkeitsverbessernde Additive in einer Menge im Bereich von 0 bis 0,00005 Gew.-%, bezogen auf das Gesamtgewicht der Polymerschicht B), besonders bevorzugt von 0 bis 0,00001 Gew.-%, bezogen auf das Gesamtgewicht der Polymerschicht B), insbesondere von 0 Gew.-%, bezogen auf das Gesamtgewicht der Polymerschicht B).

Zur Ausbildung der gas- und wasserdurchlässigen Polymerschicht B) kann bevorzugt ein flüssiges Beschichtungsmittel eingesetzt werden. Das Beschichtungsmittel kann wenigstens ein Dispergiermedium enthalten, das beispielsweise ausgewählt ist unter Wasser, organischen Lösungsmitteln und Mischungen davon. Zusätzlich kann das Beschichtungsmittel wenigstens ein Additiv enthalten, beispielsweise ein Dispergierhilfsmittel. Geeignete Dispergierhilfsmittel sind z.B. Tenside, wie anionische und speziell nichtionische Tenside. Weiterhin enthält das Beschichtungsmittel wenigstens ein Polymer, wie zuvor beschrieben, gegebenenfalls wenigstens ein leitfähigkeitsverbesserndes Additiv und gegebenenfalls wenigstens ein weiteres, davon verschiedenes Additiv.

Das Auftragen des Beschichtungsmittels zur Ausbildung einer gas- und wasserdurchlässigen Polymerschicht B) auf das Fasermaterial A) kann auf verschiedene Arten erfolgen. Während in einer diskontinuierlichen Herstellung häufig Sprüh-, Siebdruck- oder Meyer-Rod-Verfahren eingesetzt werden, kommen bei der kontinuierlichen Beschichtung bevorzugt Rakel-, Schlitzdüsen- und Gravurwalzenprozesse zum Einsatz. Dabei können die Schichtdicke und die Eindringtiefe durch die Beschichtungsprozessparameter sowie die Viskosität des Beschichtungsmittels beeinflusst werden.

Bevorzugt wird zur Herstellung der Polymerschicht B) das Beschichtungsmittel in einer Menge aufgetragen wird, dass das Auftragsgewicht, bezogen auf den Polymergehalt, 2 bis 15 g/m², bevorzugt 4 bis 7 g/m², beträgt.

Bevorzugt weist die Polymerschicht B) eine Dicke von 3 bis 50 µm, bevorzugt 5 bis 30 µm, auf. Falls sich die Polymerschicht B) teilweise innerhalb und teilweise außerhalb des Fasermaterials A) befindet, so wird auch der Anteil der Polymerschicht B), der sich innerhalb des Fasermaterials A) befindet, bei der Bestimmung der Dicke der Polymerschicht B) berücksichtigt. In diesem Falle weist die Polymerschicht B) eine deutlich höhere Dicke auf, als bei ausschließlicher Berücksichtigung der aufgetragenen Polymermenge zu erwarten wäre. So beträgt die Eindringtiefe des Polymers beispielsweise bei einer Orientierung der Längsachse der Fasern im Wesentlichen parallel zur x,y-Ebene des Fasermaterials in der Regel 1 bis 3 Faserlagen, bei einem typischen Faserdurchmesser von z.B. 10 µm. In diesem Falle beträgt der Anteil der Polymerschicht B) innerhalb des Fasermaterials A) etwa 12 bis 32 µm.

Die Bestimmung der Dicke der Polymerschicht B) kann dabei mittels Rasterelektronenmikroskop (SEM) erfolgen. Dies wurde zuvor ausführlich beschrieben.

Vor der Nachbehandlung bei erhöhtem Druck in Schritt iii) kann die Polymerschicht B) einer thermischen Behandlung unterzogen werden. Diese kann z. B. in einem Trocknungs- oder Sinterofen erfolgen. Die Trocknung erfolgt vorzugsweise bei einer Temperatur von 80 bis 300 °C, besonders bevorzugt 100 bis 200 °C. Anschließend kann eine Sinterung bei einer Temperatur von wenigstens 300 °, bevorzugt etwa 300 bis 500 °C, erfolgen. Bevorzugt erfolgt diese thermische Behandlung nicht unter erhöhtem Druck (d.h. sie erfolgt unter dem Druck, der sich in der Vorrichtung zur thermischen Behandlung bei der Behandlungstemperatur ohne zusätzlich druckerhöhende Maßnahmen einstellt).

### Schritt iii) Nachbehandlung bei erhöhtem Druck und ggf. erhöhter Temperatur

In Schritt iii) des erfindungsgemäßen Verfahrens wird das in Schritt ii) erhaltene beschichtete Fasermaterial einer Nachbehandlung bei erhöhtem Druck und gegebenenfalls erhöhter Temperatur unterzogen.

Bevorzugt erfolgt die Behandlung in Schritt iii) bei einem Flächendruck im Bereich von 0,5 bis 10,0 MPa (5 bis 100 bar), besonders bevorzugt von 1,5 bis 8,0 MPa und/oder einem Liniendruck von 3 bis 500 N/mm, vorzugsweise 5 bis 100 N/mm.

In einer speziellen Ausführung erfolgt die die Behandlung in Schritt iii) bei erhöhtem Flächendruck von wenigstens 0,5 MPa und/oder erhöhtem Liniendruck von wenigstens 3 N/mm und erhöhter Temperatur von wenigstens 100°C.

Bevorzugt erfolgt die Behandlung in Schritt iii) bei einer Temperatur im Bereich von 100 bis 350°C, besonders bevorzugt von 120 bis 330°C, insbesondere von 150 bis 320°C.

Zur Nachbehandlung in Schritt iii) können übliche Vorrichtungen, wie Ein- oder Mehretagenpressen, Endlos-Bandpressen und/oder Kalander eingesetzt werden. In einer speziellen Ausführung wird zur Nachbehandlung in Schritt iii) wenigstens eine Endlos-Bandpresse, insbesondere eine Doppelbandpresse und/oder wenigstens ein Kalander eingesetzt.

In einer speziellen Ausführung wird zur Nachbehandlung in Schritt iii) wenigstens eine Doppelbandpresse eingesetzt. In einer weiteren spezielle Ausführung wird zur Nachbehandlung in Schritt iii) wenigstens ein Kalander eingesetzt.

Einetagenpressen oder Mehretagenpresse eignen sich speziell zur diskontinuierlichen Nachbehandlung von abschnittsförmigen Materialien. Doppelbandpressen eignen sich sowohl zur Behandlung endloser bahnförmiger Materialien als auch von abschnittsförmigen Materialien (Plattenmaterial). Doppelbandpressen besitzen zwei endlos umlaufende Preßbänder, zwischen denen die GDL-Bahn unter Einwirkung von Druck und gegebenenfalls auch Wärme bei gleichzeitigem Transport in Vorlaufrichtung nachbehandelt wird. Die Bänder sind parallel zueinander ausgerichtet und zwischen dem oberen und dem unteren Band befindet sich ein Spalt, der zur Anpassung an die Dicke des GDL-Materials und zur Einstellung der gewünschten Eigenschaften geöffnet und geschlossen werden kann. Denkbar ist auch, dass die Preßbänder beim Pressvorgang nicht umlaufen.

In einer bevorzugten Ausführungsform erfolgt die Behandlung in Schritt iii) in einer Doppelbandpresse. Speziell erfolgt die Behandlung in Schritt iii) in einer Doppelbandpresse bei einem Flächendruck im Bereich von 0,5 bis 10,0 MPa (5 bis 100 bar), vorzugsweise 1 bis 8 MPa (10 bis 80 bar) und bei einer Temperatur im Bereich von 200 bis 350°C.

Grundsätzlich können in Schritt iii) des erfindungsgemäßen Verfahrens bekannte und handelsübliche Kalander eingesetzt werden. So ist es möglich, Kalander mit 2, 3, 4 oder mehr als 4 Kalanderwalzen einzusetzen. In der einfachsten bevorzugten Ausführungsform ist der im erfindungsgemäßen Verfahren verwendete Kalander ein 2-Walzen-Kalander. Die Gasdiffusionslage kann einmal oder wiederholt, z. B. 1, 2, 3, 4, 5 oder mehr als 5 mal, durch den Kalander geführt werden. Die Kalanderwalzen können in einer Geometrie angeordnet werden, die sich für das Kalandrieren der Gasdiffusionslagen eignet. Ein Zweiwalzenkalander kann eine vertikale, geneigte oder horizontale Anordnung der Walzen aufweisen. Ein Dreiwalzenkalander kann eine vertikale Anordnung, eine versetzt angeordnete Oberwalze oder versetzt angeordnete Unterwalze aufweisen. Ein Vierwalzenkalander kann eine L-Anordnung, eine umgekehrte L-Anordnung, eine S-Anordnung, eine Z-Anordnung oder eine andere Anordnung der Walzen aufweisen.

Vorzugsweise erfolgt die Behandlung in Schritt iii) in einem Kalander bei einem Liniendruck im Bereich von 3 bis 500 N/mm, vorzugsweise 5 bis 100 N/mm.

Vorzugsweise wird das Kalandrieren in Schritt iii) mit einer Geschwindigkeit von 0,05 m/min bis 30 m/min durchgeführt.

In einer bevorzugten Ausführungsform erfolgt die Behandlung in Schritt iii) in einem Kalander. Speziell erfolgt die Behandlung in Schritt iii) in einem Kalander bei einer Walzentemperatur im Bereich von 130 bis 220°C bei einem Liniendruck im Bereich von 8 bis 80 N/mm und einer Bahngeschwindigkeit von 1 bis 10 m/min.

Bevorzugt erfolgt die Behandlung in Schritt iii) in einer Presse über einen Zeitraum von 5 Sekunden bis 5 Minuten, bevorzugt von 10 Sekunden bis 2 Minuten.

Bevorzugt erfolgt die Behandlung in Schritt iii) in einem Kalander über einen Zeitraum von größer 0 Sekunden bis 10 Sekunden, bevorzugt von 0,1 Sekunden bis 5 Sekunden.

### Schritt iv) Beschichtung mit einer mikroporösen Lage C)

Die erfindungsgemäße Gasdiffusionslage besteht aus einem drei- oder mehrlagigen Schichtverbund auf Basis eines flächigen, elektrisch leitfähigen Fasermaterials A), wenigstens einer gas- und wasserdurchlässigen Polymerschicht B) und wenigstens einer mikroporösen Lage C).

In Schritt iv) des erfindungsgemäßen Verfahrens wird die Polymerschicht des in Schritt iii) erhaltenen Materials mit einem Precursor zur Ausbildung einer mikroporösen Lage C) beschichtet.

Erfindungsgemäß umfasst die mikroporöse Lage C) leitfähige Partikel in einer Matrix aus einem polymeren Bindemittel. Die leitfähigen Partikel sind vorzugsweise ausgewählt unter leitfähigen Kohlenstoffpartikeln, insbesondere Ruß, Graphit, Graphen, Kohlenstoffnanoröhren (CNT), Kohlenstoffnanofasern und Mischungen davon. Bevorzugt wird Ruß, Graphit oder eine Mischung davon eingesetzt.

Bevorzugt umfasst das polymere Bindemittel wenigstens ein Polymer, ausgewählt unter fluorhaltigen Polymeren c1), fluorfreien, hochtemperaturbeständigen Polymeren c2), davon verschiedenen Polymeren b3) und Mischungen davon.

Insbesondere enthält das polymere Bindemittel wenigstens ein fluorhaltiges Polymer. Geeignete fluorhaltigen Polymere c1) sind die zuvor beschriebenen in dem Beschichtungsmittel zur Ausbildung der Polymerschicht B) enthaltenen fluorhaltigen Polymere b1), worauf hier vollumfänglich Bezug genommen wird. Das fluorhaltige Polymer c1) ist vorzugsweise ausgewählt unter Polytetrafluorethylenen (PTFE), Tetrafluorethylen-Hexafluorpropylen-Copolymeren (FEP), Ethylen-Tetrafluorethylen-Copolymeren (ETFE), Perfluoralkoxy-Polymeren (PFA) und Mischungen davon. Bevorzugt wird ein Polytetrafluorethylen (PTFE) eingesetzt.

In einer speziellen Ausführungsform enthält das polymere Bindemittel wenigstens ein fluorhaltiges Polymer c1) als einzige Polymerkomponente. Speziell enthält das polymere Bindemittel PTFE oder besteht aus PTFE.

In einer weiteren speziellen Ausführungsform enthält das polymere Bindemittel wenigstens ein hochtemperaturbeständiges Polymer c2). Geeignete hochtemperaturbeständige Polymere c2) sind die zuvor beschriebenen in dem Beschichtungsmittel zur Ausbildung der Polymerschicht B) enthaltenen hochtemperaturbeständigen Polymere b2). Darauf wird hier in vollem Umfang Bezug genommen. Die Polymere c2) sind vorzugsweise ausgewählt unter Polyaryletherketonen (PAEK), Polyphenylensulfiden (PPS), Polysulfonen (PSU), Polyethersulfonen (PES), teilaromatischen (Co)polyamiden (Hochtemperaturpolyamiden, HTPA), Polyimiden (PI), Polyamidimiden (PAI), Polyetherimiden (PEI) und Mischungen (Blends) davon.

In einer weiteren speziellen Ausführung enthält das polymere Bindemittel eine Mischung aus wenigstens einem fluorhaltigen Polymer c1) und wenigstens einem fluorfreien, hochtemperaturbeständigen Polymer c2).

Das polymere Bindemittel kann wenigstens ein weiteres von c1) und c2) verschiedenes Polymer c3) umfassen. Geeignete Polymere c3) sind beispielsweise die zuvor genannten Polymere b3)

Speziell enthält das zur Herstellung der mikroporösen Lage C) eingesetzte polymere Bindemittel von den fluorhaltigen Polymeren c1) und den Polymeren c2) verschiedene weitere Polymere c3) in einem Gewichtsanteil von höchstens 5 %, bevorzugt von höchstens 1 %, besonders bevorzugt von höchstens 0,5 %, insbesondere von höchstens 0,1 %, bezogen auf das Gesamtgewicht des polymeren Bindemittels. Noch spezieller enthält das zur Herstellung der mikroporösen Lage C) eingesetzte polymere Bindemittel keine Zusätze von weiteren Polymeren c3), die von den fluorhaltigen Polymeren c1) und den Polymeren c2) verschieden sind.

Vorzugsweise wird zur Herstellung der mikroporösen Lage C) das polymere Bindemittel in einer Gewichtsmenge von 0,5 bis 50 Gew.-%, besonders bevorzugt von 1,0 bis 40 Gew.-%, insbesondere 10 bis 25 Gew.-%, bezogen auf das Gesamtgewicht aus polymeren Bindemitteln und leitfähigen Partikeln, eingesetzt.

Das Auftragen der MPL auf die Polymerschicht B) kann auf verschiedene Arten erfolgen. Während in einer diskontinuierlichen Herstellung häufig Sprüh-, Siebdruck- oder Meyer-Rod-Verfahren eingesetzt werden, kommen bei der kontinuierlichen Beschichtung bevorzugt Rakel-, Schlitzdüsen- und Gravurwalzenprozesse zum Einsatz. Abschließend kann eine erneute thermische Behandlung erfolgen, z. B. in einem Trocknungs- und Sinterofen. Dabei kann zunächst eine Trocknung bei einer Temperatur von 100 bis 200 °C und anschließend gegebenenfalls eine Sinterung bei einer Temperatur von 300 bis 500°C erfolgen.

Im Gegensatz zum makroporösen Fasermaterial A) ist die MPL C) mikroporös mit Porendurchmessern, die in der Regel deutlich unter einem Mikrometer liegen, bevorzugt von höchstens 900 nm, besonders bevorzugt von höchstens 500 nm, insbesondere von höchstens 300 nm. Der mittlere Porendurchmesser der MPL B) liegt vorzugsweise in einem Bereich von 5 bis 200 nm, besonders bevorzugt von 10 bis 100 nm.

Die Bestimmung Porosität und der Porengrößenverteilung kann mittels Quecksilberporosimetrie erfolgen, wie dies in der DIN ISO 15901-1:2019-03 und ISO 15901-1:2016- Teil 1: Quecksilberporosimetrie, beschrieben ist. Die zuletzt genannten mittleren Porendurchmesser gelten vor allem für den Einsatz von Ruß als leitfähige Partikel in der MPL. Durch den Einsatz von Graphit als leitfähige Partikel in der MPL oder den Einsatz von Porenbildnern lassen sich auch deutlich größere MPL-Poren erzeugen. Je nach Zusammensetzung ist der mittlere Porendurchmesser dann z. B. größer als 1 µm. Bei Einsatz verschiedener leitfähiger Partikel kann der Porendurchmesser eine bimodale oder polymodale Verteilungskurve aufweisen. So kann beim Einsatz einer Mischung aus Ruß und Graphit eine Verteilung des Porendurchmessers mit zwei Porenpeaks (ein Ruß- und ein Graphit-Peak) erhalten werden.

Die mikroporöse Lage C) weist vorzugsweise eine Dicke im Bereich von 5 bis 150 µm, besonders bevorzugt von 10 bis 100 µm auf. Diese Dicke bezieht sich auf den unkomprimierten Zustand der mikroporösen Lage B), d. h. vor der Nachbehandlung in Schritt iii) und vor dem Einbau der GDL in eine Brennstoffzelle.

Das Vorhandensein der MPL hat einen großen Einfluss auf den Wasserhaushalt der Brennstoffzelle. Aufgrund des hohen Anteils an polymerem Bindemittel, speziell PTFE und der kleineren Poren der MPL wird die Flutung der GDL und der Elektrode erschwert, indem die MPL als Flüssigwasserbarriere fungiert und somit den Massentransport der gasförmigen Reaktanden an den Katalysator begünstigt.

### Gasdiffusionslage

Ein weiterer Gegenstand der Erfindung ist eine Gasdiffusionslage für eine Brennstoffzelle, umfassend
A) ein flächiges elektrisch leitfähiges Fasermaterial,
B) eine gas- und wasserdurchlässige Polymerschicht auf wenigstens einer der Flächen des Fasermaterials,
C) eine mikroporöse Lage auf wenigstens einer der gas- und wasserdurchlässigen Polymerschichten, wobei die mikroporöse Lage leitfähige Partikel in einer Matrix aus einem polymeren Bindemittel enthält.

Insbesondere betrifft die Erfindung eine Gasdiffusionslage, die durch das zuvor beschriebene Verfahren erhältlich ist.

Die erfindungsgemäße Gasdiffusionslage weist vorzugsweise eine Dicke (Gesamtdicke aus Fasermaterial A), wenigstens einer Polymerschicht B) und wenigstens einer mikroporösen Lage C)) im Bereich von 50 bis 1000 µm, besonders bevorzugt von 75 bis 500 µm auf. Diese Dicke bezieht sich auf den unkomprimierten Zustand der GDL, d. h. vor der Nachbehandlung in Schritt iii) und vor ihrem Einbau in eine Brennstoffzelle.

Weiterhin besitzen die Gasdiffusionsschichten bevorzugt eine hohe Gesamtporosität. Diese liegt vorzugsweise im Bereich von 20 % bis 80%, bestimmt, wie zuvor beschrieben, durch Quecksilber-Porosimetrie.

Bei den erfindungsgemäßen Gasdiffusionslage ist der Anteil an Fasern, die bei einem Einsatz der Gasdiffusionslage in einer PEM-Brennstoffzelle zu einer Schädigung der Membran führen können, gegenüber herkömmlichen Gasdiffusionslagen deutlich verringert. Dies führt bei einem Einsatz in einer Brennstoffzelle zu einer deutlichen Verringerung der Kurzschlüsse durch Membranpenetration.

### Durchstoßmessung, Shorting Number:

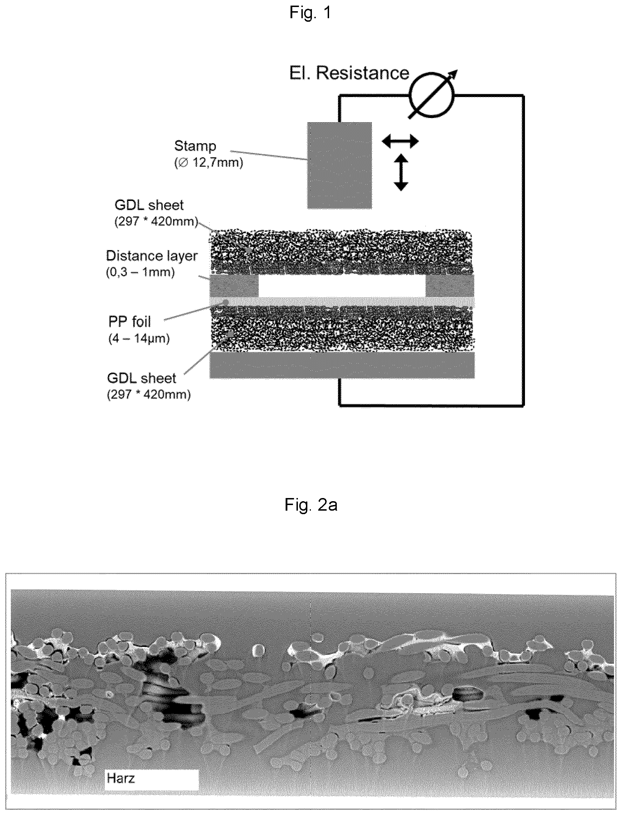

Figur 1 zeigt eine Vorrichtung für die Durchstoßmessung zur Bestimmung der Shorting Number als Messwert zur Charakterisierung der Wahrscheinlichkeit eines Kurzschlusses.

Bei der Durchstoßmessung wird eine PP-Folie (PP foil, Dicke 4 µm) zwischen zwei GDL-Proben (GDL sheet) und einer Distanzschicht (Distance layer), die eine definierte Dicke (0,1 bis 1,0 mm) und definierte Zwischenräume enthält, montiert. Die Materialien liegen dabei auf einer elektrisch leitfähigen und glatten Metallplatte. Während der Messung drückt ein Metallstempel (Stamp, Durchmesser 12,7 mm) langsam die obere GDL in den Zwischenraum der Distanzschicht ein und auf die PP-Folie. Der elektrisch leitfähige Druckstempel und die Metallplatte sind an eine Widerstandsmessung angeschlossen. Die Messung an einer Prüfstelle ist beendet, wenn der Maximaldruck erreicht ist. Ein Durchstoß durch die PP-Folie liegt vor, falls der Schwellwiderstand von 10kΩ unterschritten wird. Der zugehörige Druck wird dokumentiert. Da die GDL selbst leitfähig ist, stellt diese Messung eine Beschädigung der PP-Folie durch die eingedrückte GDL fest. Bei einem Messdurchlauf werden üblicherweise 117 Messpunkte auf einer Fläche von ca. 300 x 400 mm abgefahren.

Versuche mit PP-Folien unterschiedlicher Dicke (4 - 14 µm) zeigten zudem, dass bei abnehmender Dicke der PP-Folien die Wahrscheinlichkeit für einen Durchstoß durch die Folie / Membran zunimmt bzw. dass die Anzahl der Durchstöße bei einer gewissen Anzahl an Messungen in derselben Material- / Messparameterkombination zunimmt. Es wurden für jede Kombination mindestens 117 Messungen (Standard: 4 Durchläufe á 117 Messungen) durchgeführt.

Die Shorting Number als Messwert zur Charakterisierung der Wahrscheinlichkeit eines Kurzschlusses ist folgendermaßen definiert: Shorting Number = (Anzahl Messpunkte mit Durchstoß / Gesamtzahl Messpunkte) x 100

Mit anderen Worten, als Shorting Number wird das prozentuale Verhältnis zwischen Anzahl von Messungen mit unterschrittenem Schwellwiderstand und Gesamtanzahl an Messungen definiert. Je geringer die Anzahl von Messungen mit unterschrittenem Schwellwiderstand ist, desto kleiner ist die Shorting Number, desto geringer ist auch die Wahrscheinlichkeit der Penetration der Membran.

Bevorzugt weist die erfindungsgemäße Gasdiffusionslage eine Shorting Number von höchstens 50 %, bestimmt mittels Durchstoßmessung an einer GDL von 297 x 420 mm Grundfläche mit einem Flächengewicht von 95 g/m² und einer MPL-Beladung von 15 g/m² auf. Konkrete erfindungsgemäße Gasdiffusionslagen können eine geringere Shorting Number von beispielsweise höchstens 40 % oder höchstens 30 % aufweisen.

Konkrete Messbedingungen sind im Beispielteil beschrieben, worauf hier Bezug genommen wird.

### Brennstoffzelle und Brennstoffzellstapel

Ein weiterer Gegenstand der Erfindung ist eine Brennstoffzelle, die wenigstens eine Gasdiffusionslage umfasst, wie sie zuvor definiert wird, oder die wenigstens eine Gasdiffusionslage umfasst, die durch ein Verfahren, wie es zuvor definiert wird, erhältlich ist.

Prinzipiell eignet sich die erfindungsgemäße Gasdiffusionslage für alle üblichen Brennstoffzelltypen.. Bevorzugt handelt es sich bei der erfindungsgemäßen Brennstoffzelle um eine Protonenaustauschmembran-Brennstoffzelle (PEMFC). Eine bevorzugte Ausführungsform sind Wasser-Sauerstoff-Brennstoffzellen in Form von Niedertemperatur-Protonenaustauschmembran-Brennstoffzellen (LT-PEMFC). Auf die zuvor gemachten Ausführungen zum Aufbau von Brennstoffzellen wird in vollem Umfang Bezug genommen.

Die erfindungsgemäßen Brennstoffzellen umfassen vorzugsweise eine Polymer-Elektrolyt-Membran, auf die auf der Anoden- und Kathodenseite eine Katalysatorschicht aufgebracht ist, die die Elektroden ausbildet. Bevorzugt befindet sich auf der Anoden- und/oder Kathodenseite eine Gasdiffusionslage (GDL) in Kontakt mit der Katalysatorschicht. Die Brennstoffzellen weisen speziell eine Polymer-Elektrolyt-Membran auf, auf die eine Katalysatorschicht aufgebracht ist, die mit der Oberfläche der mikroporösen Lage C) einer erfindungsgemäßen Gasdiffusionslage in Kontakt ist. Speziell weisen die Brennstoffzellen auf der Kathodenseite eine erfindungsgemäße Gasdiffusionslage auf, wobei die Katalysatorschicht mit der Oberfläche der mikroporösen Lage C) der Gasdiffusionslage in Kontakt ist. Spezieller weisen die Brennstoffzellen auf der Kathodenseite und auf der Anodenseite eine erfindungsgemäße Gasdiffusionslage auf, wobei sowohl die Kathodenschicht als auch die Anodenschicht jeweils mit der Oberfläche der mikroporösen Lage C) einer erfindungsgemäßen Gasdiffusionslage in Kontakt ist.

Eine spezielle Ausführung der Erfindung ist eine Protonenaustauschmembran-Brennstoffzelle, umfassend
- eine Protonenaustauschmembran, die beidseitig mit einer katalytisch aktiven Elektrode beschichtet ist,
- auf jeder Seite der katalysatorbeschichteten Membran eine Gasdiffusionslage, deren Innenseite mit der katalytisch aktiven Elektrode in Kontakt ist,
- auf jeder Seite der katalysatorbeschichteten Membran eine Strömungsverteilerplatte, die Kanäle zur Zuführung von Eduktgasen und Abführung von Produkten der Zellreaktion aufweist, wobei die Kanäle mit der Außenseite der Gasdiffusionslage in Kontakt sind.

Es ist ein Vorteil der Erfindung, dass bei einem Einsatz der erfindungsgemäßen Gasdiffusionslage in einer PEM-Brennstoffzelle die Häufigkeit an Kurzschlüssen, die durch eine Faserpenetration der Membran verursacht werden, deutlich verringert wird.

Ein weiterer Gegenstand der Erfindung ist die Verwendung einer Gasdiffusionslage, umfassend
A) ein flächiges elektrisch leitfähiges Fasermaterial,
B) eine gas- und wasserdurchlässige Polymerschicht auf wenigstens einer der Flächen des Fasermaterials,
C) eine mikroporöse Lage auf wenigstens einer der gas- und wasserdurchlässigen Polymerschichten, wobei die mikroporöse Lage leitfähige Partikel in einer Matrix aus einem polymeren Bindemittel enthält,
in einer Brennstoffzelle zur Verringerung der Ausfallwahrscheinlichkeit im Betrieb, speziell zur Verringerung der Wahrscheinlichkeit eines Durchstoßes der Brennstoffzellenmembran, spezieller zur Verringerung der Shorting Number.

Ein weiterer Gegenstand der Erfindung ist ein Brennstoffzellstapel, umfassend eine Vielzahl von Brennstoffzellen, wie zuvor definiert. Zur Erzielung der gewünschten elektrischen Spannung und Leistung werden Brennstoffeinzelzellen zu Brennstoffzellstapeln zusammengeschaltet. Der Aufbau von Brennstoffzellstapeln und deren Herstellung ist dem Fachmann bekannt. Ein typischer Brennstoffzellenstapel umfasst eine erste und eine zweite Endplatte, dazwischen angeordnete Brennstoffzellen sowie eine Spannvorrichtung zum Verspannen der Brennstoffzellen zwischen den Endplatten. Der Stapelaufbau umfasst in der Regel mehreren gestapelte und in einer elektrischen Serienschaltung angeordnete planare Einzelzellen. Der Stapelaufbau wird an beiden Enden durch sogenannte Stromabnehmerplatten zur Abnahme des elektrischen Stroms versehen und durch eine - meist plattenförmige - und zum Stapelaufbau gehörende Isolierung elektrisch von den sogenannten Endplatten getrennt. Die Endplatten sind an beiden Enden des Stapelaufbaus angeordnet und durch eine Verspannungsvorrichtung, z.B. in Form von Zugankern, miteinander verbunden. Durch diese Verspannungsvorrichtung ist die Aufbringung einer Verspannungskraft bzw. einer Druckkraft auf den Stapelaufbau möglich.

Es wurde nun gefunden, dass sich die erfindungsgemäßen Gasdiffusionslagen vorteilhaft für den Einsatz in Brennstoffzellen eignet, die in verspannten Brennstoffzellstapeln angeordnet sind. Sie ermöglichen insbesondere eine hohe Kompression der Einzelzellen, wobei die Häufigkeit an Kurzschlüssen, die durch eine Faserpenetration der Membran verursacht werden, gegenüber herkömmlichen Gasdiffusionslagen deutlich verringert werden kann.

### BEVORZUGTE AUSFÜHRUNGEN DER ERFINDUNG

1. Verfahren zur Herstellung einer Gasdiffusionslage für eine Brennstoffzelle, umfassend
   A) ein flächiges elektrisch leitfähiges Fasermaterial,
   B) eine gas- und wasserdurchlässige Polymerschicht auf wenigstens einer der Flächen des Fasermaterials,
   C) eine mikroporöse Lage auf wenigstens einer der gas- und wasserdurchlässigen Polymerschichten, wobei die mikroporöse Lage leitfähige Partikel in einer Matrix aus einem polymeren Bindemittel enthält,
   bei dem man
   i) ein flächiges elektrisch leitfähiges Fasermaterial A) bereitstellt,
   ii) das in Schritt i) bereitgestellte Fasermaterial mit einem Beschichtungsmittel zur Ausbildung einer gas- und wasserdurchlässigen Polymerschicht beschichtet,
   iii) das in Schritt ii) erhaltene beschichtete Fasermaterial einer Nachbehandlung bei erhöhtem Druck und gegebenenfalls erhöhter Temperatur unterzieht, und
   iv) die Polymerschicht des in Schritt iii) erhaltenen Materials mit einem Precursor zur Ausbildung einer mikroporösen Lage beschichtet.
2. Verfahren nach einem der Ausführungsform 1, wobei das Fasermaterial A) ausgewählt ist unter Kohlefaser-Vliesstoffen, Kohlefaser-Geweben, Kohlefaser-Papieren und Kombinationen davon, wobei bevorzugt das Fasermaterial A) einen Kohlefaser-Vliessstoff umfasst oder aus einem Kohlefaser-Vliesstoff besteht.
3. Verfahren nach Ausführungsform 1 oder 2, wobei die in dem Fasermaterial A) enthaltenen Fasern Kohlenstofffasern umfassen oder aus Kohlenstofffasern bestehen, zu deren Herstellung als Ausgangsmaterial Polyacrylnitril-Fasern eingesetzt werden.
4. Verfahren nach einer der vorhergehenden Ausführungsformen, wobei das Fasermaterial A) Kohlenstoffnanoröhren in einer Menge im Bereich von 0 bis 0,00005 Gew.-%, bezogen auf das Gesamtgewicht des Fasermaterials A), besonders bevorzugt von 0 bis 0,00001 Gew.-%, bezogen auf das Gesamtgewicht des Fasermaterials A), insbesondere von 0 Gew.-%, bezogen auf das Gesamtgewicht des Fasermaterials A), enthält.
5. Verfahren nach einer der vorhergehenden Ausführungsformen, wobei sich die Polymerschicht B) teilweise innerhalb und teilweise außerhalb des Fasermaterials A) befindet.
6. Verfahren nach einer der vorhergehenden Ausführungsformen, wobei zur Herstellung der Polymerschicht B) ein Beschichtungsmittel in einer Menge aufgetragen wird, dass das Auftragsgewicht, bezogen auf den Polymergehalt, 2 bis 15 g/m², bevorzugt 4 bis 7 g/m², beträgt.
7. Verfahren nach einer der vorhergehenden Ausführungsformen, wobei die Polymerschicht B) eine Dicke (bezogen auf die innerhalb und außerhalb des Fasermaterials A) befindlichen Anteile), von 3 bis 50 µm, bevorzugt 5 bis 30 µm, aufweist.
8. Verfahren nach einer der vorhergehenden Ausführungsformen, wobei die Polymerschicht B) wenigstens ein Polymer umfasst, ausgewählt unter fluorhaltige Polymeren b1), fluorfreien, hochtemperaturbeständigen Polymeren b2), davon verschiedenen Polymeren b3) und Mischungen davon.
9. Verfahren nach einer der vorhergehenden Ausführungsformen, wobei die Polymerschicht B) Kohlenstoffnanoröhren, Kohlefasern und Mischungen davon in einer Menge im Bereich von 0 bis 0,00005 Gew.-%, bezogen auf das Gesamtgewicht der Polymerschicht B), besonders bevorzugt von 0 bis 0,00001 Gew.-%, bezogen auf das Gesamtgewicht der Polymerschicht B), insbesondere von 0 Gew.-%, bezogen auf das Gesamtgewicht der Polymerschicht B), enthält.
10. Verfahren nach einer der vorhergehenden Ausführungsformen, wobei die mikroporöse Lage C) wenigstens ein Polymer umfasst, ausgewählt unter fluorhaltige Polymeren c1), fluorfreien, hochtemperaturbeständigen Polymeren c2), davon verschiedenen Polymeren c3) und Mischungen davon.
11. Verfahren nach Ausführungsform 8 oder 10, wobei das fluorhaltige Polymere ausgewählt ist unter Polytetrafluorethylen, Tetrafluorethylen-Hexafluorpropylen-Copolymeren, Perfluoralkoxy-Polymeren und Mischungen davon.
12. Verfahren nach Ausführungsform 8 oder 10, wobei das fluorfreie, hochtemperaturbeständige Polymeren ausgewählt ist unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon.
13. Verfahren nach einer der vorhergehenden Ausführungsformen, wobei die Behandlung in Schritt iii) bei einem Flächendruck im Bereich von 0,5 bis 10,0 MPa, bevorzugt von 1,5 bis 8,0 MPa und/oder einem Liniendruck von 3 bis 500 N/mm, vorzugsweise 5 bis 100 N/mm durchgeführt wird.
14. Verfahren nach einer der vorhergehenden Ausführungsformen, wobei die Behandlung in Schritt iii) bei einer Temperatur im Bereich von 100 bis 350°C, bevorzugt von 120 bis 330°C, besonders bevorzugt von 150 bis 320°C, durchgeführt wird.
15. Verfahren nach einer der vorhergehenden Ausführungsformen, wobei zur Behandlung in Schritt iii) eine Vorrichtung eingesetzt wird, ausgewählt unter Einetagenpressen, Mehretagenpressen, Endlos-Bandpressen, Kalandern und Kombinationen davon, bevorzugt ausgewählt unter Doppelbandpressen, Kalandern und Kombinationen davon.
16. Verfahren nach einer der vorhergehenden Ausführungsformen, wobei die Behandlung in Schritt iii) in einem Kalander bei einem Liniendruck im Bereich von 3 bis 500 N/mm, vorzugsweise 5 bis 100 N/mm, erfolgt.
17. Gasdiffusionslage, erhältlich durch ein Verfahren, wie in einer der Ausführungsformen 1 bis 16 definiert.
18. Gasdiffusionslage für eine Brennstoffzelle, umfassend
   A) ein flächiges elektrisch leitfähiges Fasermaterial,
   B) eine gas- und wasserdurchlässige Polymerschicht auf wenigstens einer der Flächen des Fasermaterials,
   C) eine mikroporöse Lage auf wenigstens einer der gas- und wasserdurchlässigen Polymerschichten, wobei die mikroporöse Lage leitfähige Partikel in einer Matrix aus einem polymeren Bindemittel enthält.
19. Gasdiffusionslage nach Ausführungsform 18 mit einer Shorting Number von höchstens 25 %, bestimmt mittels Durchstoßmessung an einer GDL von 297 x 420 mm Grundfläche mit einem Flächengewicht von 73 g/m² und einer MPL-Beladung von 23 g/m².
20. Brennstoffzelle, umfassend wenigstens eine Gasdiffusionslage, wie in einer der Ausführungsformen 18 oder 19 definiert, oder erhältlich durch ein Verfahren, wie in einer der Ausführungsformen 1 bis 16 definiert.
21. Brennstoffzelle nach Ausführungsform 20 in Form einer Protonenaustauschmembran-Brennstoffzelle, umfassend
   - eine Protonenaustauschmembran, die beidseitig mit einer katalytisch aktiven Elektrode beschichtet ist,
   - auf jeder Seite der katalysatorbeschichteten Membran eine Gasdiffusionslage, deren Innenseite mit der katalytisch aktiven Elektrode in Kontakt ist,
   - auf jeder Seite der katalysatorbeschichteten Membran eine Strömungsverteilerplatte, die Kanäle zur Zuführung von Eduktgasen und Abführung von Produkten der Zellreaktion aufweist, wobei die Kanäle mit der Außenseite der Gasdiffusionslage in Kontakt sind.
22. Brennstoffzelle nach Ausführungsform 20 oder 21, umfassend wenigstens eine Protonenaustauschmembran, auf die eine Katalysatorschicht aufgebracht ist, wobei die Katalysatorschicht mit der Oberfläche der mikroporösen Lage C) der Gasdiffusionslage in Kontakt ist.
23. Brennstoffzellstapel, umfassend eine Vielzahl von Brennstoffzellen, wie in einer der Ausführungsformen 20 bis 22 definiert.
24. Verwendung einer Gasdiffusionslage, umfassend
   A) ein flächiges elektrisch leitfähiges Fasermaterial,
   B) eine gas- und wasserdurchlässige Polymerschicht auf wenigstens einer der Flächen des Fasermaterials,
   C) eine mikroporöse Lage auf wenigstens einer der gas- und wasserdurchlässigen Polymerschichten, wobei die mikroporöse Lage leitfähige Partikel in einer Matrix aus einem polymeren Bindemittel enthält,
   in einer Brennstoffzelle zur Verringerung der Ausfallwahrscheinlichkeit im Betrieb, speziell zur Verringerung der Wahrscheinlichkeit eines Durchstoßes der Brennstoffzellenmembran, spezieller zur Verringerung der Shorting Number.
25. Verwendung nach Ausführungsform 24, wobei die Gasdiffusionslage erhältlich ist durch ein Verfahren, wie in einer der Ausführungsformen 1 bis 16 definiert.

### FIGURENBESCHREIBUNG

Figur 1 zeigt eine Vorrichtung für die Durchstoßmessung zur Bestimmung der Shorting Number als Messwert zur Charakterisierung der Wahrscheinlichkeit eines Kurzschlusses.
Figur 2 a zeigt eine rasterelektronenmikroskopische Aufnahme eines mit einer Zusammensetzung aus Ruß und PTFE imprägnierten Fasersubstrats mit einseitig aufgetragener FEP-Polymerschicht und Nachbehandlung durch Heißpressen

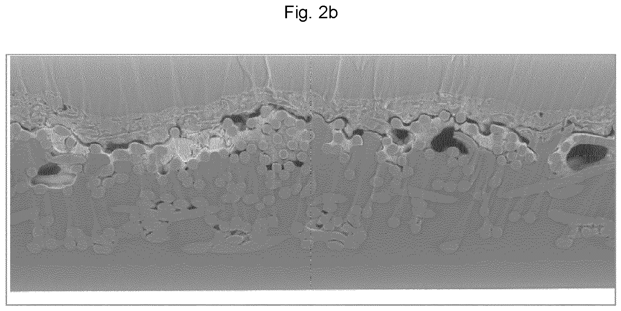

Figur 2 b zeigt eine rasterelektronenmikroskopische Aufnahme des Substrats aus Figur 2a mit zusätzlich aufgetragener MPL.

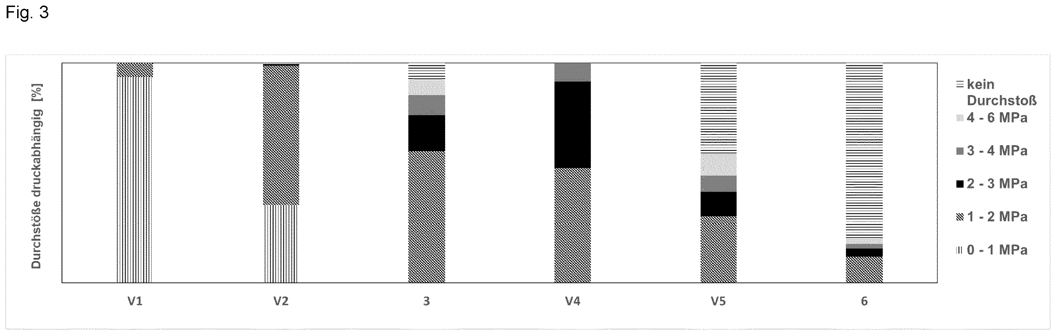

Figur 3 zeigt die Ergebnisse der Durchstoßmessung gemäß Tabelle 2.

Die folgenden Beispiele dienen der Erläuterung der Erfindung, ohne sie in irgendeiner Weise zu beschränken.

### BEISPIELE

### I) Herstellung von Gasdiffusionslagen

Es wurden Gasdiffusionslagen aus einem Vliesstoff aus Kohlenstofffasern hergestellt. Zur besseren Beurteilung des Einflusses der verschiedenen Verfahrensmaßnahmen auf das Ausmaß der Fasereinbindung wurde ein rauerer Vliesstoff (Material A) und ein feinerer Vliesstoff (Material B) eingesetzt. Das rauere Material A wies eine höhere Anzahl von nicht in das Fasermaterial eingebundenen Fasern auf als das Material B. Das Material A diente dabei als Modellsystem für die Leistungsfähigkeit des erfindungsgemäßen Verfahrens bei schwierigen Fasermaterialien, auch wenn nicht in jedem Falle Produkte erhalten wurden, die sich optimal für den Einsatz auf der Membranseite einer Brennstoffzelle eignen. Erfindungsgemäß erfolgte der Auftrag einer gas- und wasserdurchlässigen Polymerschicht B), eine Nachbehandlung durch Pressen oder Kalandrieren und der Auftrag einer mikroporösen Lage C). In den Vergleichsversuchen wurde jeweils auf eine oder mehrere der folgenden Maßnahmen verzichtet:
- Auftrag einer gas- und wasserdurchlässigen Polymerschicht B),
- Nachbehandlung durch Pressen oder Kalandrieren,
- Auftrag einer mikroporösen Lage
Herstellungsbeispiel:
Zur Herstellung eines flächigen elektrisch leitfähigen Materials wurde ein Vliesstoff aus 100% Kohlenstofffasern mit einem Flächengewicht von 63 g/m² eingesetzt. Zur Ausrüstung des Vliesstoffs wurde eine Imprägnierzusammensetzung gemischt, die bezogen auf den Feststoff 70% Ruß und 30% PTFE enthielt. Die Ausrüstung erfolgte durch Foulard-Imprägnierung mit einer wässrigen Dispersion mit 15% Ausrüstungsgewicht bezogen auf die Masse des GDL-Substrat (entsprechend 9,5 g/m²). Anschließend erfolgte eine Trocknung für 1 Minute bei 180 °C und eine Sinterung für 1 Minute bei 440 °C.

Das rauere Material A wies nach Ausrüstung einen Mittenrauwert Rₐ von 11,28 µm und eine gemittelte Rautiefe R_{z} von 74,67 µm auf. Das feinere Material B wies nach Ausrüstung einen Mittenrauwert Rₐ von 7,40 µm und eine gemittelte Rautiefe R_{z} von 55,05 µm auf. Bestimmung der Rauheit erfolgt nach der DIN 4768-1:1974-08 mit einem Digitalmikroskop Keyence VHX-7000. Die Werte sind jeweils Durchschnittswerte aus 6 Bestimmungen: 3 in Maschinenrichtung (MD) und 3 senkrecht zur Maschinenrichtung (CD).

Auf das so erhaltene Substrat wurde dann zunächst ein Beschichtungsmittel aufgetragen, das eine wässrige Dispersion eines Tetrafluorethylen-Hexafluorpropylen-Copolymers enthielt (FEP-Beschichtung). Das Auftragsgewicht, bezogen auf den Gehalt an Polymer betrug 7 g/m². Nach dem Auftrag erfolgte eine erneute Trocknung für 2,5 Minuten bei 120 °C und eine Sinterung für 2,5 Minuten bei 400 °C.

Die Vliesstoffe mit FEP-Beschichtung wurden entweder einer Nachbehandlung in einer Doppelbandpresse bei 60 bar Druck und einer Temperatur von 250 °C für 30 s unterzogen. Alternativ wurde eine Kalandrierung in einem ZweiwalzenKalander mit einer Stahlwalze und einer Gummiwalze (Härte 82 Shore D) bei einem Liniendruck von 40 N/mm, einer Temperatur der Stahlwalze von 150 °C und einer Bahngeschwindigkeit von 5 m/min durchgeführt.

Zur Herstellung von erfindungsgemäßen Gasdiffusionslagen wurde anschließend auf die nachbehandelte FEP-Beschichtung noch eine MPL aufgebracht. Für die MPL-Beschichtung wurde auf das Fasermaterial eine MPL-Paste aufgetragen, die 3,3 Gew.-% PTFE und 13,3 Gew.-% Kohlenstoff in destilliertem Wasser enthielt. Anschließend wurde das Fasermaterial 2,5 Minuten bei 120 °C getrocknet und 2,5 Minuten bei 400 °C gesintert. Die resultierende MPL-Beladung betrug 23 g/m².

Analog zu dieser Herstellungsvorschrift wurden die folgenden erfindungsgemäßen GDL und Vergleichs-GDL der Tabelle 1 hergestellt.

**Tabelle 1**

| Bsp. Nr. | Behandlung | FEP | MPL |
|---|---|---|---|
| V1 | Material A, unbehandelt | nein | nein |
| V2 | Material A, mit MPL, unbehandelt | nein | ja |
| 3 | Material A, nachbehandelt durch Pressen | ja | ja |
| V4 | Material B, unbehandelt | nein | nein |
| V5 | Material B, mit MPL, unbehandelt | nein | ja |
| 6 | Material B, nachbehandelt durch Pressen | ja | ja |

### II) Anwendungstechnische Beispiele

### Durchstoßmessung, Shorting Number:

Die Durchstoßmessung zur Bestimmung der Shorting Number erfolgte, wie zuvor eingehend beschrieben. Bei einem Messdurchlauf wurden 117 Messpunkte auf einer Fläche von ca. 300 x 400 mm abgefahren. Die Ergebnisse sind Tabelle 2 zu entnehmen. Shorting Number und Unversehrtheitswahrscheinlichkeit addieren sich für ein Beispiel jeweils zu 100%. Die druckabhängige Durchstoßwahrscheinlichkeit gibt an, wie hoch die Wahrscheinlichkeit eines Kurzschlusses im jeweiligen Druckbereich ist. Die Summe aller druckabhängigen Durchstoßwahrscheinlichkeiten eines Beispiels entspricht der Shorting Number.

**Tabelle 2**

| Bsp. Nr. | Unversehrtheitswahrscheinlichkeit [%] | Shorting no. [%] | druckabh. Durchstoßwahrscheinlichkeit [%] | | | | |
|---|---|---|---|---|---|---|---|
| | | | 0-1 MPa | 1-2 MPa | 2-3 MPa | 3-4 MPa | 4-6 MPa |
| V1 | 0,0 | 100,0 | 93,7 | 6,3 | 0,0 | 0,0 | 0,0 |
| V2 | 0,0 | 100,0 | 35,5 | 63,5 | 0,9 | 0,0 | 0,2 |
| 3 | 7,6 | 92,4 | 0,0 | 59,9 | 16,3 | 9,1 | 7,1 |
| V4 | 0,0 | 100,0 | 0,0 | 52,4 | 39,3 | 8,3 | 0,0 |
| V5 | 41,0 | 59,0 | 0,0 | 30,3 | 11,1 | 7,3 | 10,3 |
| 6 | 79,5 | 20,5 | 0,0 | 12,0 | 3,6 | 2,1 | 2,8 |

### Zusammenfassung der Ergebnisse:

Vergleichsbeispiel V1 zeigt, dass bei einem rauen Fasermaterial ohne FEP- und MPL-Beschichtung und ohne eine Nachbehandlung bei erhöhtem Druck und erhöhter Temperatur ganz geringe Drücke bei der Durchstoßmessung ausreichen, um eine Schädigung zu verursachen.

Eine Nachbehandlung des Materials A nur durch Pressen bei erhöhter Temperatur (nicht durch ein Beispiel gemäß Tabelle 1 gezeigt) führt dazu, dass etwas höhere Drücke von mindestens 1-2 MPa bei der Durchstoßmessung aufgewendet werden müssen, um 100% Durchstöße zu erzielen.

Vergleichsbeispiel V2 zeigt, dass bei einem rauen Fasermaterial nur mit MPL-Beschichtung und ohne eine Nachbehandlung, Drücke von mindestens 2-3 MPa bei der Durchstoßmessung aufgewendet werden müssen, um 100% Durchstöße zu erzielen.

Das erfindungsgemäße Beispiel 3 zeigt, dass durch die Kombination von FEP- und MPL-Beschichtung mit einer Nachbehandlung durch Pressen selbst bei deutlich höheren Drücken nicht mehr 100% Durchstöße erzielt werden. Vergleichbar gute Resultate konnten erzielt werden, wenn die Nachbehandlung durch Kalandrieren erfolgte. Das Beispiel 3 belegt, dass durch die Kombination aller Maßnahmen auch bei Einsatz eines raueren Fasermaterials eine deutliche Verbesserung der Durchstoßeigenschaften erzielt werden kann. Ein solches Material eignet sich z.B. als GDL zum Verbau auf der Bipolarplatten-Seite einer Brennstoffzelle.

Vergleichsbeispiel V4 zeigt, dass bei einem feinen Fasermaterial (Material B) aufgrund der geringeren Anzahl an herausstehenden Fasern bereits von vorne herein, d.h. ohne FEP- und MPL-Beschichtung und ohne eine Nachbehandlung bei erhöhtem Druck und erhöhter Temperatur die Durchstoßwahrscheinlichkeit geringer ist.

Vergleichsbeispiel V5 zeigt, dass auf Material B nur mit MPL-Beschichtung und ohne eine Nachbehandlung, die Shorting Number bereits auf 59 % (entsprechend einer Unversehrtheitswahrscheinlichkeit von 41%) reduziert wird.

Zusätzliches Pressen (nicht durch ein Beispiel belegt) erniedrigt die Anzahl der Durchstöße um etwa 20%.

Das erfindungsgemäße Beispiele 6 belegt, dass durch die Kombination aller Maßnahmen ein Material mit sehr guter Eignung als GDL und zum membranseitigen Einbau in eine Brennstoffzelle erhalten wird.

## Patentansprüche

1. Verfahren zur Herstellung einer Gasdiffusionslage für eine Brennstoffzelle, umfassend
A) ein flächiges elektrisch leitfähiges Fasermaterial,
B) eine gas- und wasserdurchlässige Polymerschicht auf wenigstens einer der Flächen des Fasermaterials,
C) eine mikroporöse Lage auf wenigstens einer der gas- und wasserdurchlässigen Polymerschichten, wobei die mikroporöse Lage leitfähige Partikel in einer Matrix aus einem polymeren Bindemittel enthält,
bei dem man
i) ein flächiges elektrisch leitfähiges Fasermaterial A) bereitstellt,
ii) das in Schritt i) bereitgestellte Fasermaterial mit einem Beschichtungsmittel zur Ausbildung einer gas- und wasserdurchlässigen Polymerschicht beschichtet,
iii) das in Schritt ii) erhaltene beschichtete Fasermaterial einer Nachbehandlung bei erhöhtem Druck und gegebenenfalls erhöhter Temperatur unterzieht, und
iv) die Polymerschicht des in Schritt iii) erhaltenen Materials mit einem Precursor zur Ausbildung einer mikroporösen Lage beschichtet.

2. Verfahren nach einem der Anspruch 1, wobei das Fasermaterial A) ausgewählt ist unter Kohlefaser-Vliesstoffen, Kohlefaser-Geweben, Kohlefaser-Papieren und Kombinationen davon, wobei bevorzugt das Fasermaterial A) einen Kohlefaser-Vliessstoff umfasst oder aus einem Kohlefaser-Vliesstoff besteht.

3. Verfahren nach Anspruch 1 oder 2, wobei das Fasermaterial A) Kohlenstoffnanoröhren in einer Menge im Bereich von 0 bis 0,00005 Gew.-%, bezogen auf das Gesamtgewicht des Fasermaterials A), besonders bevorzugt von 0 bis 0,00001 Gew.-%, bezogen auf das Gesamtgewicht des Fasermaterials A), insbesondere von 0 Gew.-%, bezogen auf das Gesamtgewicht des Fasermaterials A), enthält.

4. Verfahren nach einem der Ansprüche 1 oder 2 oder 3, wobei die Polymerschicht B)
- sich teilweise innerhalb und teilweise außerhalb des Fasermaterials A) befindet
und/oder
- die Polymerschicht B) eine Dicke (bezogen auf die innerhalb und außerhalb des Fasermaterials A) befindlichen Anteile), von 3 bis 50 µm, bevorzugt 5 bis 30 µm, aufweist.

5. Verfahren nach einem der vorhergehenden Ansprüche, wobei zur Herstellung der Polymerschicht B) ein Beschichtungsmittel in einer Menge aufgetragen wird, dass das Auftragsgewicht, bezogen auf den Polymergehalt, 2 bis 15 g/m², bevorzugt 4 bis 7 g/m², beträgt.

6. Verfahren nach einem der vorhergehenden Ansprüche, wobei die Polymerschicht B) wenigstens ein Polymer umfasst, ausgewählt unter fluorhaltige Polymeren b1), fluorfreien, hochtemperaturbeständigen Polymeren b2), davon verschiedenen Polymeren b3) und Mischungen davon.

7. Verfahren nach einem der vorhergehenden Ansprüche, wobei die Polymerschicht B) Kohlenstoffnanoröhren, Kohlefasern und Mischungen davon in einer Menge im Bereich von 0 bis 0,00005 Gew.-%, bezogen auf das Gesamtgewicht der Polymerschicht B), besonders bevorzugt von 0 bis 0,00001 Gew.-%, bezogen auf das Gesamtgewicht der Polymerschicht B), insbesondere von 0 Gew.-%, bezogen auf das Gesamtgewicht der Polymerschicht B), enthält.

8. Verfahren nach einem der vorhergehenden Ansprüche, wobei die mikroporöse Lage C) wenigstens ein Polymer umfasst, ausgewählt unter fluorhaltige Polymeren c1), fluorfreien, hochtemperaturbeständigen Polymeren c2), davon verschiedenen Polymeren c3) und Mischungen davon.

9. Verfahren nach Anspruch 6 oder 8, wobei das fluorhaltige Polymere ausgewählt ist unter Polytetrafluorethylen, Tetrafluorethylen-Hexafluorpropylen-Copolymeren, Perfluoralkoxy-Polymeren und Mischungen davon.

10. Verfahren nach Anspruch 6 oder 8, wobei das fluorfreie, hochtemperaturbeständige Polymeren ausgewählt ist unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon.

11. Verfahren nach einem der vorhergehenden Ansprüche, wobei zur Behandlung in Schritt iii) eine Vorrichtung eingesetzt wird, ausgewählt unter Einetagenpressen, Mehretagenpressen, Endlos-Bandpressen, Kalandern und Kombinationen davon, bevorzugt ausgewählt unter Doppelbandpressen, Kalandern und Kombinationen davon.

12. Gasdiffusionslage für eine Brennstoffzelle, umfassend
A) ein flächiges elektrisch leitfähiges Fasermaterial,
B) eine gas- und wasserdurchlässige Polymerschicht auf wenigstens einer der Flächen des Fasermaterials,
C) eine mikroporöse Lage auf wenigstens einer der gas- und wasserdurchlässigen Polymerschichten, wobei die mikroporöse Lage leitfähige Partikel in einer Matrix aus einem polymeren Bindemittel enthält,
wobei die Gasdiffusionslage bevorzugt erhältlich ist durch ein Verfahren, wie in einem der Ansprüche 1 bis 11 definiert.

13. Brennstoffzelle, umfassend wenigstens eine Gasdiffusionslage nach Anspruch 12 oder erhältlich ist durch ein Verfahren, wie in einem der Ansprüche 1 bis 11 definiert.

14. Brennstoffzelle nach Anspruch 13 in Form einer Protonenaustauschmembran-Brennstoffzelle, umfassend
- eine Protonenaustauschmembran, die beidseitig mit einer katalytisch aktiven Elektrode beschichtet ist,
- auf jeder Seite der katalysatorbeschichteten Membran eine Gasdiffusionslage, deren Innenseite mit der katalytisch aktiven Elektrode in Kontakt ist,
- auf jeder Seite der katalysatorbeschichteten Membran eine Strömungsverteilerplatte, die Kanäle zur Zuführung von Eduktgasen und Abführung von Produkten der Zellreaktion aufweist, wobei die Kanäle mit der Außenseite der Gasdiffusionslage in Kontakt sind.

15. Brennstoffzellstapel, umfassend eine Vielzahl von Brennstoffzellen, wie in einem der Ansprüche 13 oder 14 definiert.

16. Verwendung einer Gasdiffusionslage, umfassend
A) ein flächiges elektrisch leitfähiges Fasermaterial,
B) eine gas- und wasserdurchlässige Polymerschicht auf wenigstens einer der Flächen des Fasermaterials,
C) eine mikroporöse Lage auf wenigstens einer der gas- und wasserdurchlässigen Polymerschichten, wobei die mikroporöse Lage leitfähige Partikel in einer Matrix aus einem polymeren Bindemittel enthält,
wobei die Gasdiffusionslage bevorzugt erhältlich ist durch ein Verfahren, wie in einem der Ansprüche 1 bis 11 definiert,
in einer Brennstoffzelle zur Verringerung der Ausfallwahrscheinlichkeit im Betrieb, speziell zur Verringerung der Wahrscheinlichkeit eines Durchstoßes der Brennstoffzellenmembran, spezieller zur Verringerung der Shorting Number.
